# EUROPEAN PATENT APPLICATION

(11) **EP 4 624 820 A1**
(43) Date of publication of application: **01.10.2025**
(21) Application number: 23894441.7
(22) Date of filing: 10.11.2023
(51) Int. Cl.: F24F 11/74, F24F 11/64, F24F 140/00

(54) **AIR CONDITIONER**

(30) Priority: 25.11.2022 JP 2022188095
(71) Applicant: Fujitsu General Limited, Kawasaki-shi, Kanagawa 213-8502 (JP)
(72) Inventor: TABUCHI, Kensuke, Kawasaki-shi, Kanagawa 213-8502 (JP); SHIBATA, Ryo, Kawasaki-shi, Kanagawa 213-8502 (JP); SHIMOTANI, Makoto, Kawasaki-shi, Kanagawa 213-8502 (JP)
(74) Representative: TBK
(86) International application number: PCT/JP2023/040522
(87) International publication number: WO 2024/111432

(57) **Abstract**

An air conditioning device according to an embodiment of the present invention includes: an outdoor unit including a plurality of outdoor heat exchangers and an outdoor fan that blows air to the plurality of outdoor heat exchangers; at least one indoor unit connected to the outdoor unit via a refrigerant pipe; and a control device that controls a rotation speed of the outdoor fan. The control device determines, when determining that the number of outdoor heat exchangers used is to be increased, the rotation speed of the outdoor fan such that a heat exchange amount of the outdoor heat exchanger after an increase in the number of outdoor heat exchangers used is equal to or lower than the heat exchange amount of the outdoor heat exchanger before the increase in the number of outdoor heat exchangers used, and determines, when determining that the number of outdoor heat exchangers used is to be decreased, the rotation speed of the outdoor fan such that a heat exchange amount of the outdoor heat exchanger after a decrease in the number of outdoor heat exchangers used is equal to or larger than the heat exchange amount of the outdoor heat exchanger before the decrease in the number of outdoor heat exchangers used.

## Description

### Technical Field

The present invention relates to an air conditioning device, and more specifically, to an air conditioning device including an outdoor unit with a plurality of outdoor heat exchangers.

### Background Art

An air conditioning device including an outdoor unit with a plurality of outdoor heat exchangers is known (see, for example, Patent Literature 1). This type of air conditioning device switches the number of outdoor heat exchangers used and the rotation speed of an outdoor fan in accordance with an air conditioning capacity requested by an indoor unit.

### Citation List

### Patent Literature

Patent Literature 1: WO2015/11141

### Disclosure of Invention

### Technical Problem

However, when the number of outdoor heat exchangers used is increased along with an increase in capacity requested from an indoor unit or an increase in air conditioning load due to a change in outside air temperature, the condensing capacity or evaporating capacity of the outdoor heat exchanger may exceed a requested capacity to a large extent due to the increase in the number of outdoor heat exchangers. On the other hand, when the number of outdoor heat exchangers used is decreased along with a decrease in capacity requested from an indoor unit or a decrease in air conditioning load due to a change in outside air temperature, the condensing capacity or evaporating capacity of the outdoor heat exchanger may fall below a requested capacity to a large extent due to the decrease in the number of outdoor heat exchangers. If the excess or shortage of the capacity occurs when the number of outdoor heat exchangers used is increased or decreased in such a manner, the air conditioning device decreases the number of outdoor heat exchangers used when the capacity is excessive, and increases the number of outdoor heat exchangers used when the capacity is lacking, and thus the increase or decrease in the number of outdoor heat exchangers used may be repeated frequently.

In the case of including a plurality of outdoor heat exchangers, a flow path switching valve that switches a direction in which a refrigerant flows in each outdoor heat exchanger is provided to each outdoor heat exchanger. As described above, when the increase or decrease in the number of outdoor heat exchangers used is repeated frequently due to a change in capacity requested from an indoor unit or a change in air conditioning load due to a change in outside air temperature during operation of the air conditioning device, the flow path switching valves are switched in accordance with the increase or decrease in the number of outdoor heat exchangers used, and thus the operation sound thereof is generated frequently to become noise. Further, there arises a problem in that the deterioration of the flow path switching valves is accelerated resulting from the frequent switching operation of the flow path switching valve. Furthermore, there is a problem that the change in capacity of the outdoor heat exchanger is repeated frequently, and the temperature of an air conditioning space is not made stable and the comfort is deteriorated.

In view of the circumstances as described above, it is an object of the present invention to provide an air conditioning device capable of suppressing occurrence of noise associated with a frequent increase or decrease in the number of outdoor heat exchangers used, reduction in reliability, and deterioration of comfort.

### Solution to Problem

An air conditioning device according to an embodiment of the present invention is an air conditioning device including: an outdoor unit that includes a compressor, a plurality of outdoor heat exchangers, a plurality of flow path switching valves that are respectively provided to the plurality of outdoor heat exchangers and switch connection of one refrigerant inlet/outlet of each outdoor heat exchanger to a refrigerant discharge port or a refrigerant suction port of the compressor, and an outdoor fan that blows air to the plurality of outdoor heat exchangers; at least one indoor unit that is connected to the outdoor unit via a refrigerant pipe; and a control device that controls a rotation speed of the outdoor fan, in which
the control device
determines whether to increase the number of outdoor heat exchangers used in accordance with a requested air conditioning capacity, and determines, when determining that the number of outdoor heat exchangers used is to be increased, the rotation speed of the outdoor fan such that a heat exchange amount of the outdoor heat exchanger after an increase in the number of outdoor heat exchangers used is equal to or lower than the heat exchange amount of the outdoor heat exchanger before the increase in the number of outdoor heat exchangers used, and
determines whether to decrease the number of outdoor heat exchangers used in accordance with a requested air conditioning capacity, and determines, when determining that the number of outdoor heat exchangers used is to be decreased, the rotation speed of the outdoor fan such that a heat exchange amount of the outdoor heat exchanger after a decrease in the number of outdoor heat exchangers used is equal to or larger than the heat exchange amount of the outdoor heat exchanger before the decrease in the number of outdoor heat exchangers used.

Assuming that a maximum value of the heat exchange amount of the outdoor heat exchanger before the increase in the number of outdoor heat exchangers used is a first heat exchange amount and that a minimum value of the heat exchange amount of the outdoor heat exchanger after the increase in the number of outdoor heat exchangers used is a second heat exchange amount, the control device may determine, when determining that the number of outdoor heat exchangers used is to be increased, the rotation speed of the outdoor fan such that the first heat exchange amount is equal to or larger than the second heat exchange amount.

Assuming that a maximum value of the heat exchange amount of the outdoor heat exchanger after the decrease in the number of outdoor heat exchangers used is a first heat exchange amount and that a minimum value of the heat exchange amount of the outdoor heat exchanger before the decrease in the number of outdoor heat exchangers used is a second heat exchange amount, the control device may determine, when determining that the number of outdoor heat exchangers used is to be decreased, the rotation speed of the outdoor fan such that the first heat exchange amount is equal to or larger than the second heat exchange amount.

Assuming that a value obtaining by dividing the second heat exchange amount by the first heat exchange amount is a heat exchange amount change ratio, the control device may determine the rotation speed of the outdoor fan such that the heat exchange amount change ratio is equal to or lower than a predetermined first threshold.

The control device may determine the rotation speed of the outdoor fan such that the heat exchange amount change ratio is equal to or larger than a predetermined second threshold that is a value smaller than the first threshold.

The control device may use, as the heat exchange amount, an evaluation index determined on the basis of a volume of each outdoor heat exchanger, a blast volume by the outdoor fan, and a ratio of an air volume flowing into each outdoor heat exchanger to the blast volume.

### Advantageous Effects of Invention

According to the present invention, it is possible to suppress the occurrence of noise associated with a frequent increase or decrease in the number of outdoor heat exchangers used, reduction in reliability, and deterioration of comfort.

### Brief Description of Drawings

[Fig. 1] Fig. 1 is a refrigerant circuit diagram showing a configuration example of an air conditioning device according to an embodiment of the present invention.
[Fig. 2] Fig. 2 is a block diagram showing a configuration of a control device in the air conditioning device.
[Fig. 3] Fig. 3 is a diagram showing a relationship between the number of outdoor heat exchangers used that are performing a cooling-dominated operation, and a heat exchange amount (condensing capacity) of the outdoor heat exchanger and a condensation temperature of the refrigerant in the outdoor heat exchanger before and after the increase in the number of outdoor heat exchangers used.
[Fig. 4] Fig. 4 is a schematic diagram showing a relationship between the number of outdoor heat exchangers used and the control range of the rotation speed of an outdoor fan in the air conditioning device.
[Fig. 5] Fig. 5 is a flowchart showing an example of a processing procedure executed by the control device.
[Fig. 6] Fig. 6 is a diagram for describing an action of the air conditioning device, showing a relationship between the number of outdoor heat exchangers used that are performing a cooling-dominated operation, and the heat exchange amount (condensing capacity) of the outdoor heat exchanger and the condensation temperature of the refrigerant in the outdoor heat exchanger before and after the increase in the number of outdoor heat exchangers used.
[Fig. 7] Fig. 7 is a diagram showing a relationship between a first heat exchange amount and a second heat exchange amount of the outdoor heat exchanger functioning as a condenser in the air conditioning device.
[Fig. 8] Fig. 8 is a diagram for describing an action of the air conditioning device, showing a relationship between the number of outdoor heat exchangers used that are performing a heating-dominated operation, and a heat exchange amount (evaporating capacity) of the outdoor heat exchanger and an evaporation temperature of the refrigerant in the outdoor heat exchanger before and after the increase in the number of outdoor heat exchangers used.
[Fig. 9] Fig. 9 is a diagram showing a relationship between a first heat exchange amount and a second heat exchange amount of the outdoor heat exchanger functioning as an evaporator in the air conditioning device.
[Fig. 10] Fig. 10 is a refrigerant circuit diagram of an air conditioning device according to another embodiment of the present invention.

### Mode(s) for Carrying Out the Invention

An embodiment of the present invention will be described below with reference to the drawings.

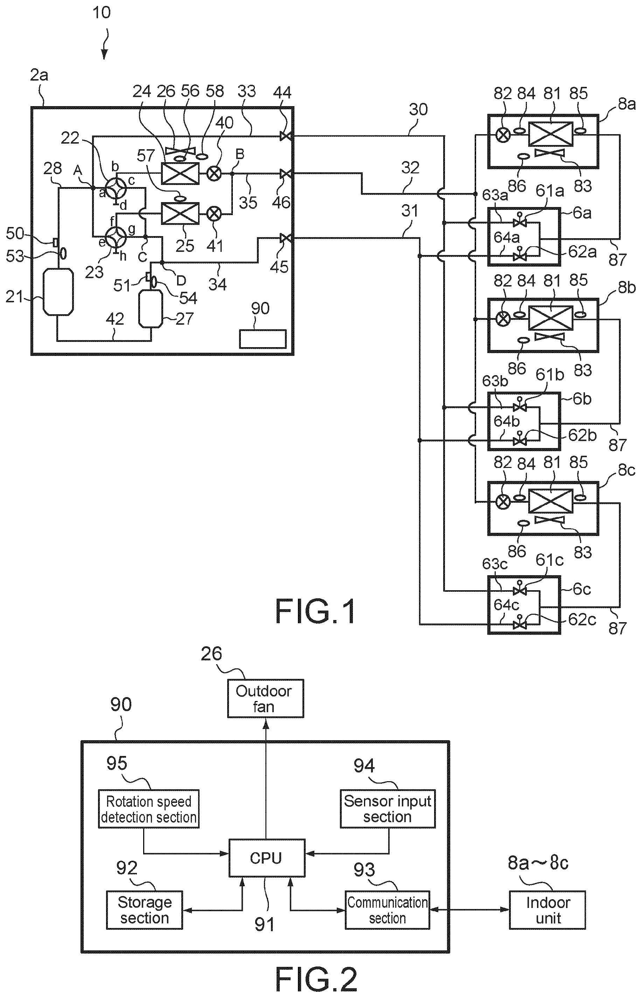

Fig. 1 is a refrigerant circuit diagram showing a configuration example of an air conditioning device 10 according to an embodiment of the present invention. The air conditioning device 10 includes a plurality of indoor units and selectively performs cooling or heating in each indoor unit (cooling/heating free system). In this embodiment, an air conditioning device in which one outdoor unit 2a and three indoor units 8a, 8b, and 8c are connected in parallel will be described as an example.

### [Air Conditioning Device]

First, a configuration and an operation example of the air conditioning device 10 will be described first with reference to Fig. 1.

As shown in Fig. 1, the air conditioning device 10 includes the outdoor unit 2a, the three indoor units 8a, 8b, and 8c, and three diversion units 6a, 6b, and 6c. The outdoor unit 2a, the indoor units 8a to 8c, and the diversion units 6a to 6c are connected to each other via a high-pressure gas pipe 30, a low-pressure gas pipe 31, and a liquid pipe 32, thereby forming the refrigerant circuit of the air conditioning device 10.

In this air conditioning device 10, various operations such as a heating operation (where all indoor units performing a heating operation), a heating-dominated operation (where the total value of the capacity requested by the indoor unit performing a heating operation exceeds the total value of the capacity requested by the indoor unit performing a cooling operation), a cooling operation (where all indoor units perform a cooling operation), and a cooling-dominated operation (where the total value of the capacity requested by the indoor unit performing a cooling operation exceeds the total value of the capacity requested by the indoor unit performing a heating operation) are possible in accordance with the open/close state of various valves provided in the outdoor unit 2a and the diversion units 6a to 6c.

### (Outdoor Unit)

The outdoor unit 2a includes a compressor 21, a first four-way valve 22, a second four-way valve 23, a first outdoor heat exchanger 24, a second outdoor heat exchanger 25, an outdoor fan 26, an accumulator 27, a first outdoor expansion valve 40 connected to the first outdoor heat exchanger 24, and a second outdoor expansion valve 41 connected to the second outdoor heat exchanger 25.

The compressor 21 is a variable capacity compressor whose operating capacity can be varied by being driven by a motor (not shown) whose rotation speed is controlled by an inverter. The discharge side of the compressor 21 is connected to a port a of the first four-way valve 22 and a port e of the second four-way valve 23 via a discharge pipe 28 and is connected to a stop valve 44 via the discharge pipe 28 and an outdoor unit high-pressure gas pipe 33. The discharge pipe 28 is a refrigerant pipe that connects the discharge side of the compressor 21 and a connection point A, and the outdoor unit high-pressure gas pipe 33 is a refrigerant pipe that connects the connection point A and the stop valve 44. Further, the suction side of the compressor 21 is connected to the outlet side of the accumulator 27 via a suction pipe 42, and the inlet side of the accumulator 27 is connected to a stop valve 45 via an outdoor unit low-pressure gas pipe 34.

The first four-way valve 22 and the second four-way valve 23 correspond to a plurality of flow path switching valves respectively provided to the plurality of outdoor heat exchangers (the first outdoor heat exchanger 24 and the second outdoor heat exchanger 25). The first four-way valve 22 and the second four-way valve 23 are each a valve for switching the direction of the refrigerant flowing in the refrigerant circuit. The first four-way valve 22 switches connection of one refrigerant inlet/outlet of the first outdoor heat exchanger 24 to a refrigerant discharge port or refrigerant suction port of the compressor 21, and the second four-way valve 23 switches connection of one refrigerant inlet/outlet of the second outdoor heat exchanger 25 to a refrigerant discharge port or refrigerant suction port of the compressor 21.

The first four-way valve 22 includes four ports a, b, c, and d. In the first four-way valve 22, the refrigerant pipe connected to the port a is connected to the discharge pipe 28 and the outdoor unit high-pressure gas pipe 33 at the connection point A. Further, the port b and one end (one refrigerant inlet/outlet) of the first outdoor heat exchanger 24 is connected via a refrigerant pipe, and the refrigerant pipe connected to the port c is connected to the outdoor unit low-pressure gas pipe 34 at a connection point D. The port d is closed.

The second four-way valve 23 includes four ports e, f, g, and h. In the second four-way valve 23, the refrigerant pipe connected to the port e is connected, at the connection point A, to the refrigerant pipe connected to the discharge pipe 28 and the outdoor unit high-pressure gas pipe 33. Further, the port f and one end (one refrigerant inlet/outlet) of the second outdoor heat exchanger 25 are connected via a refrigerant pipe, and the refrigerant pipe connected to the port g is connected, at a connection point C, to the refrigerant pipe connected to the port c of the first four-way valve 22. The port h is closed.

The one end (one refrigerant inlet/outlet) of the first outdoor heat exchanger 24 is connected to the port b of the first four-way valve 22 via the refrigerant pipe as described above, and the other end (the other refrigerant inlet/outlet) is connected to one port of the first outdoor expansion valve 40 via a refrigerant pipe. The other port of the first outdoor expansion valve 40 is connected to a stop valve 46 via an outdoor unit liquid pipe 35. Further, the one end (one refrigerant inlet/outlet) of the second outdoor heat exchanger 25 is connected to the port f of the second four-way valve 23 via the refrigerant pipe as described above, and the other end (the other refrigerant inlet/outlet) is connected to one port of the second outdoor expansion valve 41 via a refrigerant pipe. The other port of the second outdoor expansion valve 41 is connected to a connection point B in the outdoor unit liquid pipe 35 via a refrigerant pipe.

The inlet side of the accumulator 27 is connected to the outdoor unit low-pressure gas pipe 34, and the outlet side is connected to the suction side of the compressor 21 via the suction pipe 42. The accumulator 27 separates the refrigerant that has flowed into it into a gas refrigerant and a liquid refrigerant, and causes only the gas refrigerant to be sucked into the compressor 21. The outdoor fan 26 rotates by a fan motor (not shown) to take in outside air into the outdoor unit 2a, exchange heat between the refrigerant and the outside air in the first outdoor heat exchanger 24 and the second outdoor heat exchanger 25, and then release the heat-exchanged outside air to the outside of the outdoor unit 2a.

In addition to the configuration described above, various sensors are provided in the outdoor unit 2a. As shown in Fig. 1, the discharge pipe 28 is provided with a high-pressure sensor 50 that detects the pressure of the refrigerant discharged from the compressor 21 and a discharge temperature sensor 53 that detects the temperature of the refrigerant discharged from the compressor 21. Further, between the connection point D in the outdoor unit low-pressure gas pipe 34 and the inlet side of the accumulator 27, a low-pressure sensor 51 that detects the pressure of the refrigerant sucked into the compressor 21 and a suction temperature sensor 54 that detects the temperature of the refrigerant sucked into the compressor 21 are provided.

The first outdoor heat exchanger 24 is provided with a first heat exchange temperature sensor 56 that detects the temperature of the refrigerant that flows into the first outdoor heat exchanger 24. Further, the second outdoor heat exchanger 25 is provided with a second heat exchange temperature sensor 57 that detects the temperature of the refrigerant that flows into the second outdoor heat exchanger 25. Further, an outside air temperature sensor 58 that detects the temperature of the outside air that flows into the outdoor unit 2a, i.e., the outside air temperature, is provided.

### (Indoor Unit)

Each of the three indoor units 8a to 8c includes an indoor heat exchanger 81, an indoor expansion valve 82, and an indoor fan 83. Note that since the configurations of the indoor units 8a to 8c are all the same, only the configuration of the indoor unit 8a will be described below and description of the other indoor units 8b and 8c will be omitted.

One end (one refrigerant inlet/outlet) of the indoor heat exchanger 81 is connected to one port of the indoor expansion valve 82 via a refrigerant pipe, and the other end (the other refrigerant inlet/outlet) is connected to a diversion unit 6a to be described below via a refrigerant pipe 87. The indoor heat exchanger 81 functions as an evaporator in the case where the indoor unit 8a performs a cooling operation, and functions as a condenser in the case where the indoor unit 8a performs a heating operation.

The one port of the indoor expansion valve 82 is connected to the indoor heat exchanger 81 as described above, and the other port is connected to the liquid pipe 32. The degree of opening of the indoor expansion valve 82 is adjusted in accordance with the requested cooling capacity in the case where the indoor heat exchanger 81 functions as an evaporator, and the degree of opening is adjusted in accordance with the requested heating capacity in the case where the indoor heat exchanger 81 functions as a condenser.

The indoor fan 83 rotates by a fan motor (not shown) to take in indoor air into the indoor unit 8a, exchange heat between the refrigerant and the indoor air in the indoor heat exchanger 81, and then supply the heat-exchanged air to the inside of the room.

In addition to the configurations described above, various sensors are provided in the indoor unit 8a. The refrigerant pipe of the indoor heat exchanger 81 on the side of the indoor expansion valve 82 and the refrigerant pipe of the indoor heat exchanger 81 on the side of the diversion unit 6a are respectively provided with a refrigerant temperature sensor 84 that detects the temperature of the refrigerant and a refrigerant temperature sensor 85 that detects the temperature of the refrigerant. Further, a room-temperature sensor 86 that detects the temperature of the indoor air that flows into the indoor unit 8a, i.e., the indoor temperature, is provided near a suction port (not shown) of indoor air of the indoor unit 8a.

### (Diversion Unit)

The air conditioning device 10 includes the three diversion units 6a to 6c corresponding to the three indoor units 8a to 8c. The diversion units 6a to 6c respectively include first solenoid valves 61a to 61c, second solenoid valves 62a to 62c, first diversion pipes 63a to 63c, and second diversion pipes 64a to 64c. Note that since the configurations of the diversion units 6a to 6c are all the same, only the configuration of the diversion unit 6a will be described below and description of the other diversion units 6b and 6c will be omitted.

One end of the first diversion pipe 63a is connected to the high-pressure gas pipe 30, and one end of the second diversion pipe 64a is connected to the low-pressure gas pipe 31. Further, the other end of the first diversion pipe 63a and the other end of the second diversion pipe 64a are connected to each other, and this connection part and the indoor heat exchanger 81 are connected via the refrigerant pipe 87. The first diversion pipe 63a and the second diversion pipe 64a are respectively provided with the first solenoid valve 61a and the second solenoid valve 62a. By opening and closing the first solenoid valve 61a and the second solenoid valve 62a, the flow path of the refrigerant in the refrigerant circuit can be switched such that the indoor heat exchanger 81 of the indoor unit 8a corresponding to the diversion unit 6a is connected to the discharge side of the compressor 21 (the side of the high-pressure gas pipe 30) or the suction side thereof (the side of the low-pressure gas pipe 31).

The connections described above form the refrigerant circuit of the air conditioning device 10, and a refrigeration cycle is established by causing a refrigerant to flow through the refrigerant circuit.

### (Control Device)

The outdoor unit 2a includes a control device 90. Fig. 2 is a block diagram showing a configuration of the control device 90. As shown in the figure, the control device 90 includes a CPU 91, a storage section 92, a communication section 93, a sensor input section 94, and a rotation speed detection section 95.

The storage section 92 is a nonvolatile memory such as a flash memory, and stores control programs or control parameters of the outdoor unit 2a, detection values corresponding to detection signals from various sensors, control states of the compressor 21 and the outdoor fan 26, and the like.

The communication section 93 is an interface that communicates with the indoor units 8a to 8c. The sensor input section 94 takes in detection results of the various sensors of the outdoor unit 2a and outputs them to the CPU 91. The rotation speed detection section 95 detects the rotation speed of the motor of the compressor 21 and outputs it to the CPU 91. The rotation speed detection section 95 may be configured to directly detect the rotation speed of the motor by using an encoder or the like attached to the drive shaft of the motor, or may be configured to detect the rotation speed of the motor from a drive current supplied from the motor.

The CPU 91 is a control unit that controls each device in the outdoor unit 2a including the compressor 21 by executing the programs stored in the storage section 92. The programs are installed, for example, in the control device 90 in advance. Alternatively, the programs may be installed or updated via the Internet or the like.

The CPU 91 takes in the detection results of the sensors of the above-mentioned outdoor unit 2a via the sensor input section 94. Further, the CPU 91 takes in the control signals transmitted from the indoor units 8a to 8c via the communication section 93. In addition, the CPU 91 takes in the rotation speed of the motor of the compressor 21 from the rotation speed detection section 95 as described above. The CPU 91 controls the drive of the compressor 21 or the outdoor fan 26 on the basis of the taken-in detection results or control signals. Further, the CPU 91 performs switching control of the first four-way valve 22, the second four-way valve 23, the first expansion valve 40, and the second expansion valve 41 on the basis of the taken-in detection results or control signals.

Note that the opening and closing control of the first solenoid valves 61a to 61c and the second solenoid valves 62a to 62c in the diversion units 6a to 6c is performed by control devices (not shown) of the indoor units 8a to 8c corresponding to the diversion units 6a to 6c, respectively.

### [Basic Operation of Air Conditioning Device]

Next, the basic operation of the air conditioning device 10 will be described. Note that the first outdoor heat exchanger 24 and the second outdoor heat exchanger 25 are assumed to be used together in the description of the operation.

### (Full Heating Operation)

As shown in Fig. 1, in the case where all the indoor units 8a to 8c perform a heating operation, the first outdoor heat exchanger 24 is caused to function as an evaporator by switching the first four-way valve 22 of the outdoor unit 2a such that the port b and the port c communicate with each other (shown by a solid line in Fig. 1) and the second outdoor heat exchanger 25 is caused to function as an evaporator by switching the second four-way valve 23 of the outdoor unit 2a such that the port f and the port g communicate with each other (shown by a solid line in Fig. 1).

The first solenoid valves 61a to 61c of the diversion units 6a to 6c corresponding to the indoor units 8a to 8c are opened to respectively cause refrigerants to flow through the first diversion pipes 63a to 63c and the second solenoid valves 62a to 62c are closed to shut off the second diversion pipes 64a to 64c. As a result, the indoor heat exchangers 81 of the indoor units 8a to 8c all function as condensers.

The high-pressure refrigerant discharged from the compressor 21 of the outdoor unit 2a flows through the discharge pipe 28 and the outdoor unit high-pressure gas pipe 33 and flows into the high-pressure gas pipe 30 via the stop valve 44. The high-pressure refrigerant that has flowed into the high-pressure gas pipe 30 branches off and flows into the diversion units 6a to 6c. The high-pressure refrigerants that have flowed into the diversion units 6a to 6c respectively flow through the first diversion pipes 63a to 63c provided with the opened first solenoid valves 61a to 61c and flow out from the diversion units 6a to 6c to flow into the indoor units 8a to 8c corresponding to the diversion units 6a to 6c via the refrigerant pipes 87.

The high-pressure refrigerants that have flowed into the indoor units 8a to 8c flow into the respective indoor heat exchangers 81 and exchange heat with the indoor air to be condensed. This warms the indoor air, and thus, the rooms in which the indoor units 8a to 8c are installed are heated. The high-pressure refrigerant flowing out from the indoor heat exchanger 81 is reduced in pressure by passing through the indoor expansion valve 82. The degree of opening of the indoor expansion valve 82 is determined in accordance with the degree of supercooling of the refrigerant at the refrigerant outlet of the indoor heat exchanger 81. The degree of supercooling of the refrigerant is obtained by, for example, subtracting the refrigerant temperature at the refrigerant outlet of the indoor heat exchanger 81 detected by the refrigerant temperature sensor 84 from the high-pressure saturation temperature (corresponding to the condensation temperature in the indoor heat exchanger 81) calculated from the pressure detected by the high-pressure sensor 50 of the outdoor unit 2a.

The intermediate-pressure refrigerants flowing out from the indoor units 8a to 8c flow into the liquid pipe 32, and flow into the outdoor unit 2a through the stop valve 46. The intermediate-pressure refrigerant that has flowed into the outdoor unit 2a flows through the outdoor unit liquid pipe 35, branches off at the connection point B, and is reduced in pressure by passing through the first outdoor expansion valve 40 and the second outdoor expansion valve 41 to be low-pressure refrigerants.

The degree of opening of the first outdoor expansion valve 40 is determined in accordance with the degree of superheat of the refrigerant at the refrigerant outlet of the first outdoor heat exchanger 24. Further, the degree of opening of the second outdoor expansion valve 41 is determined in accordance with the degree of superheat of the refrigerant at the refrigerant outlet of the second outdoor heat exchanger 25. The degree of superheat of the refrigerant is obtained by, for example, subtracting the low-pressure saturation temperature (corresponding to the evaporation temperature in the first outdoor heat exchanger 24 or the second outdoor heat exchanger 25) calculated from the pressure detected by the low-pressure sensor 51 of the outdoor unit 2a from the refrigerant temperature in the first outdoor heat exchanger 24 or the second outdoor heat exchanger 25 detected by the first heat exchange temperature sensor 56 or the second heat exchange temperature sensor 57.

The low-pressure refrigerants that have been reduced in pressure by the first outdoor expansion valve 40 and the second outdoor expansion valve 41 respectively flow into the first outdoor heat exchanger 24 and the second outdoor heat exchanger 25 and exchange heat with the outside air to be evaporated. Then, the low-pressure refrigerants flowing out from the first outdoor heat exchanger 24 and the second outdoor heat exchanger 25 join at the connection point C via the first four-way valve 22 and the second four-way valve 23 and are sucked into the compressor 21 via the connection point D and the accumulator 27 to be compressed again.

### (Full Cooling Operation)

Next, the case where all the indoor units 8a to 8c perform a cooling operation will be described. In the case where all the indoor units 8a to 8c perform a cooling operation, the first outdoor heat exchanger 24 is caused to function as a condenser by switching the first four-way valve 22 of the outdoor unit 2a such that the port a and the port b communicate with each other (shown by a broken line in Fig. 1) and the second outdoor heat exchanger 25 is caused to function as a condenser by switching the second four-way valve 23 such that the port e and the port f communicate with each other (shown by a broken line in Fig. 1).

The first solenoid valves 61a to 61c of the diversion units 6a to 6c corresponding to the indoor units 8a to 8c are closed to shut off the first diversion pipes 63a to 63c and the second solenoid valves 62a to 62c are opened to respectively cause the refrigerants to flow through the second diversion pipes 64a to 64c. As a result, the indoor heat exchangers 81 of the indoor units 8a to 8c all function as evaporators.

The high-pressure refrigerant discharged from the compressor 21 of the outdoor unit 2a branches off to the side of the first four-way valve 22 and second four-way valve 23 and to the side of the high-pressure gas pipe 30. The refrigerant flowing through the side of the first four-way valve 22 and second four-way valve 23 flows into the first outdoor heat exchanger 24 and the second outdoor heat exchanger 25 and exchanges heat with the outside air to be condensed. The refrigerant flowing through the side of the high-pressure gas pipe 30 does not flow into the indoor units 8a to 8c because the first solenoid valves 61a to 61c of the diversion units 6a to 6c are closed, and stagnates in the outdoor unit high-pressure gas pipe 33 and the high-pressure gas pipe 30.

The refrigerants condensed in the first outdoor heat exchanger 24 and the second outdoor heat exchanger 25 of the outdoor unit 2a respectively pass through the first outdoor expansion valve 40 and the second outdoor expansion valve 41, which are fully opened by the control device 90, and flow into the liquid pipe 32 via the stop valve 46. The intermediate-pressure refrigerant that has flowed into the liquid pipe 32 branches off and flows into the indoor units 8a to 8c.

The intermediate-pressure refrigerant that has flowed into each of the indoor units 8a to 8c is reduced in pressured by the indoor expansion valve 82 to be a low-pressure refrigerant and flows into the indoor heat exchanger 81. The low-pressure refrigerant that has flowed into the indoor heat exchanger 81 exchanges heat with the indoor air to be evaporated, and thus, the rooms in which the indoor units 8a to 8c are installed are cooled. Here, the degree of superheat of the refrigerant at the outlet of the indoor heat exchanger 81 that is an evaporator is determined from the refrigerant temperatures detected by the refrigerant temperature sensors 84 and 85, and the degree of opening of the indoor expansion valve 82 is determined in accordance therewith.

The low-pressure refrigerants flowing out from the indoor heat exchangers 81 flow into the diversion units 6a to 6c through the refrigerant pipes 87, flow through the second diversion pipes 64a to 64c equipped with the opened second solenoid valves 62a to 62c, and flow into the low-pressure gas pipe 31. Then, the low-pressure refrigerants that have flowed into the low-pressure gas pipe 31 from the diversion units 6a to 6c and joined in the low-pressure gas pipe 31 flow into the outdoor unit 2a. The low-pressure refrigerant that has flowed into the outdoor unit 2a passes through the outdoor unit low-pressure gas pipe 34 and is sucked into the compressor 21 via the accumulator 27 to be compressed again.

Next, the case where the indoor units 8a to 8c perform a heating-dominated operation and a cooling-dominated operation in which a cooling operation and a heating operation are mixed (hereinafter, also referred to as a cooling and heating mixing operation) will be described.

In the case where the indoor units 8a to 8c perform a cooling operation and a heating operation in a mixed manner, the state of the refrigerant circuit is determined in accordance with the result of a comparison between the total value of the cooling capacity requested by the indoor unit performing a cooling operation and the total value of the heating capacity requested by the indoor unit performing a heating operation. In this embodiment, as an example, a heating-dominated operation in which the first outdoor heat exchanger 24 and the second outdoor heat exchanger 25 are caused to function as evaporators is performed in the case where the indoor units 8a and 8b perform a heating operation, the indoor unit 8c performs a cooling operation, and the heating capacity requested by the two indoor units 8a and 8b performing a heating operation is larger than the cooling capacity requested by the one indoor unit 8c performing a cooling operation. Further, a cooling-dominated operation in which the first outdoor heat exchanger 24 and the second outdoor heat exchanger 25 are caused to function as condensers is performed in the case where the indoor units 8a and 8b perform a cooling operation, the indoor unit 8c performs a heating operation, and the cooling capacity requested by the two indoor units 8a and 8b performing a cooling operation is larger than the heating capacity requested by the one indoor unit 8c performing a heating operation.

### (Heating-Dominated Operation)

In the heating-dominated operation, in the outdoor unit 2a, the first four-way valve 22 is switched such that the port b and the port c communicate with each other (shown by a solid line in Fig. 1), and the second four-way valve 23 is switched such that the port f and the port g communicate with each other (shown by a solid line in Fig. 1). As a result, both the first outdoor heat exchanger 24 and the second outdoor heat exchanger 25 function as evaporators.

Further, the first solenoid valves 61a and 61b of the two diversion units 6a and 6b corresponding to the two indoor units 8a and 8b performing a heating operation are opened to connect the first diversion pipes 63a and 63b, and the second solenoid valves 62a and 62b are closed to shut off the second diversion pipes 64a and 64b. As a result, the indoor heat exchangers 81 of the two indoor units 8a and 8b function as condensers. Meanwhile, the first solenoid valve 61c of the diversion unit 6c corresponding to the indoor unit 8c performing a cooling operation is closed to shut off the first diversion pipe 63c, and the second solenoid valve 62c is opened to connect the second diversion pipe 64c. As a result, the indoor heat exchanger 81 of the indoor unit 8c functions as an evaporator.

The high-pressure refrigerant discharged from the compressor 21 of the outdoor unit 2a flows through the high-pressure gas pipe 30 and branches off and flows into the diversion units 6a and 6b. The high-pressure refrigerants that have flowed into the diversion units 6a and 6b respectively flow through the first diversion pipes 63a and 63b equipped with the opened first solenoid valves 61a and 61b, flow out from the diversion units 6a and 6b, and flow into the corresponding indoor units 8a and 8b via the refrigerant pipes 87.

The high-pressure refrigerants that have flowed into the indoor units 8a and 8b flow into the respective indoor heat exchangers 81 and exchange heat with the indoor air to be condensed, and thus, the rooms in which the indoor units 8a and 8b are installed are heated. The high-pressure refrigerants condensed in the indoor heat exchangers 81 are reduced in pressure by passing through the indoor expansion valves 82 to be intermediate-pressure refrigerants. Here, the control unit of each of the indoor units 8a and 8b obtains the degree of supercooling of the refrigerant at the indoor heat exchanger 81 that is a condenser from the refrigerant temperature detected by the refrigerant temperature sensor 84 and the high-pressure saturation temperature obtained from the outdoor unit 2a, and the degree of opening of the indoor expansion valve 82 is determined in accordance therewith.

The intermediate-pressure refrigerants flowing out from the indoor units 8a and 8b flow into the liquid pipe 32. Then, part of the intermediate-pressure refrigerants that have joined in the liquid pipe 32 flows into the outdoor unit 2a, and the remainder flows through the liquid pipe 32 and flows into the indoor unit 8c.

The intermediate-pressure refrigerant that has flowed into the outdoor unit 2a is reduced in pressure to be a low-pressure refrigerant when passing through the first outdoor expansion valve 40 and the second outdoor expansion valve 41 whose degrees of opening correspond to the degrees of superheat of the first outdoor heat exchanger 24 and the second outdoor heat exchanger 25, and flows into the first outdoor heat exchanger 24 and the second outdoor heat exchanger 25. The low-pressure refrigerants that have flowed into the first outdoor heat exchanger 24 and the second outdoor heat exchanger 25 exchange heat with the outside air to be evaporated. Then, the low-pressure refrigerants flowing out from the first outdoor heat exchanger 24 and the second outdoor heat exchanger 25 respectively pass through the first four-way valve 22 and the second four-way valve 23, then pass through the accumulator 27, and are sucked into the compressor 21 to be compressed again.

Meanwhile, the intermediate-pressure refrigerant that has flowed into the indoor unit 8c is reduced in pressure by the indoor expansion valve 82 to be a low-pressure refrigerant and flows into the indoor heat exchanger 81. The low-pressure refrigerant that has flowed into the indoor heat exchanger 81 exchanges heat with the indoor air to be evaporated, and thus, the room in which the indoor unit 8c is installed is cooled. Here, the degree of superheat of the refrigerant at the indoor heat exchanger 81 that is an evaporator is obtained from the refrigerant temperatures detected by the refrigerant temperature sensors 84 and 85, and the degree of opening of the indoor expansion valve 82 of the indoor unit 8c is determined in accordance therewith.

The low-pressure refrigerant that has flowed out from the indoor heat exchanger 8c flows into the diversion unit 6c through the refrigerant pipe 87, flows through the second diversion pipe 64c equipped with the opened second solenoid valve 62c, and flows into the low-pressure gas pipe 31. The low-pressure refrigerant that has flowed into the low-pressure gas pipe 31 flows into the outdoor unit 2a through a branching pipe 71 and low-pressure gas diversion pipes 31a and 31b, passes through the accumulator 27, and is sucked into the compressor 21 to be compressed again.

### (Cooling-Dominated Operation)

In the cooling-dominated operation, in the outdoor unit 2a, the first four-way valve 22 is switched such that the port a and the port b communicate with each other (shown by a broken line in Fig. 1), and the second four-way valve 23 is switched such that the port e and the port f communicate with each other (shown by a broken line in Fig. 1). As a result, both the first outdoor heat exchanger 24 and the second outdoor heat exchanger 25 function as condensers.

Further, the first solenoid valves 61a and 61b of the two diversion units 6a and 6b corresponding to the two indoor units 8a and 8b performing a cooling operation are closed to shut off the first diversion pipes 63a and 63b, and the second solenoid valves 62a and 62b are opened to connect the second diversion pipes 64a and 64b. As a result, the indoor heat exchangers 81 of the two indoor units 8a and 8b function as evaporators. Meanwhile, the solenoid valve 61c of the diversion unit 6c corresponding to the indoor unit 8c performing a heating operation is opened to connect the first diversion pipe 63c, and the second solenoid valve 62c is closed to shut off the second diversion pipe 64c. As a result, the indoor heat exchanger 81 of the indoor unit 8c functions as a condenser.

The high-pressure refrigerant discharged from the compressor 21 of the outdoor unit 2a branches off to the side of the first four-way valve 22 and second four-way valve 23 and to the side of the high-pressure gas pipe 30. The high-pressure refrigerants that have passed through the first four-way valve 22 and the second four-way valve 23 flow into the first outdoor heat exchanger 24 and the second outdoor heat exchanger 25 and exchange heat with the outside air to be condensed. The refrigerants that have been condensed in the first outdoor heat exchanger 24 and the second outdoor heat exchanger 25 respectively pass through the first outdoor expansion valve 40 and the second outdoor expansion valve 41 whose degrees of opening are set to correspond to the difference between the discharge pressure of the compressor 21 and the liquid pressure by the control device 90 to be intermediate-pressure refrigerants, and flow through the liquid pipe 32 to branch off and flow into the indoor units 8a and 8b.

The intermediate-pressure refrigerant that has flowed into each of the indoor units 8a and 8b is reduced in pressure by the indoor expansion valve 82 to be a low-pressure refrigerant and flows into the indoor heat exchanger 81. The low-pressure refrigerant that has flowed into the indoor heat exchanger 81 exchanges heat with the indoor air to be evaporated, and thus, the rooms in which the indoor units 8a and 8b are installed are cooled. Here, the degree of superheat of the refrigerant at the indoor heat exchanger 81 that is an evaporator is obtained from the refrigerant temperatures detected by the refrigerant temperature sensors 84 and 85, and the degree of opening of the indoor expansion valve 82 is determined in accordance therewith.

The low-pressure refrigerants flowing out from the indoor heat exchangers 81 of the indoor units 8a and 8b flow into the diversion units 6a and 6b through the refrigerant pipes 87, flow through the second diversion pipes 64a and 64b equipped with the opened second solenoid valves 62a and 62b, and flow into the low-pressure gas pipe 31. Then, the low-pressure refrigerants that have flowed into the low-pressure gas pipe 31 from the diversion units 6a and 6b join in the low-pressure gas pipe 31, then flow into the outdoor unit 2a, pass through the accumulator 27, and is sucked into the compressor 21 to be compressed again.

Meanwhile, the high-pressure refrigerant that has flowed into the diversion unit 6c through the high-pressure gas pipe 30 flows through the first diversion pipe 63c equipped with the opened solenoid valve 61c and flows into the indoor unit 8c. The high-pressure refrigerant that has flowed into the indoor unit 8c from the diversion unit 6c through the refrigerant pipe 87 flows into the indoor heat exchanger 81 and exchanges heat with the indoor air to be condensed, and thus, the room in which the indoor unit 8c is installed is heated. The high-pressure refrigerant that has flowed out from the indoor heat exchanger 81 is reduced in pressure by passing through the indoor expansion valve 82 to be an intermediate-pressure refrigerant. Here, the degree of supercooling of the refrigerant at the indoor heat exchanger 81 that is a condenser is obtained from the refrigerant temperature detected by the refrigerant temperature sensor 84 and the high-pressure saturation temperature detected by the outdoor units 2a, and the degree of opening of the indoor expansion valve 82 of the indoor unit 8c is determined in accordance therewith.

The intermediate-pressure refrigerant that has flowed out from the indoor unit 8c to the liquid pipe 32 flows into the outdoor unit 2a. The intermediate-pressure refrigerant that has flowed into the outdoor unit 2a is reduced in pressure to be a low-pressure refrigerant when passing through the first outdoor expansion valve 40 and the second outdoor expansion valve 41 whose degrees of opening correspond to the degrees of superheat of the first outdoor heat exchanger 24 and the second outdoor heat exchanger 25, and flows into the first outdoor heat exchanger 24 and the second outdoor heat exchanger 25. The low-pressure refrigerants that have flowed into the first outdoor heat exchanger 24 and the second outdoor heat exchanger 25 exchange heat with the outdoor air to be evaporated. The low-pressure refrigerants that have flowed out from the first outdoor heat exchanger 24 and the second outdoor heat exchanger 25 then respectively pass through the first four-way valve 22 and the second four-way valve 23, then pass through the accumulator 27, and are sucked into the compressor 21 to be compressed again.

Note that in the full heating operation and the heating-dominated operation, if the heating capacity requested by the indoor unit is small, the number of outdoor heat exchangers used may be one. If the number of outdoor heat exchangers used is one, in the outdoor unit 2a, the first four-way valve 22 is switched such that the port b and the port c communicate with each other (shown by a solid line in Fig. 1), the second four-way valve 23 is switched such that the port e and the port f communicate with each other (shown by a broken line in Fig. 1), and the second outdoor expansion valve 41 is fully closed. As a result, only the first outdoor heat exchanger 24 is used as an evaporator, and the use of the second outdoor heat exchanger 25 is stopped. The number of outdoor heat exchangers used is switched in accordance with an increase or decrease in capacity requested by the indoor unit performing a heating operation or an increase or decrease in air conditioning load due to a change in outside air temperature, as will be described later.

Likewise, in the full cooling operation and the cooling-dominated operation, if the cooling capacity requested by the indoor unit is small, the number of outdoor heat exchangers used may be one. If the number of outdoor heat exchangers used is one, in the outdoor unit 2a, the first four-way valve 22 is switched such that the port a and the port b communicate with each other (shown by a broken line in Fig. 1), the second four-way valve 23 is switched such that the port f and the port g communicate with each other (shown by a solid line in Fig. 1), and the first outdoor expansion valve 40 is fully closed. As a result, only the first outdoor heat exchanger 24 is used as a condenser, and the use of the second outdoor heat exchanger 25 is stopped. The number of outdoor heat exchangers used is switched in accordance with an increase or decrease in capacity requested by the indoor unit performing a cooling operation or an increase or decrease in air conditioning load due to a change in outside air temperature, as will be described later.

### (Problems When Number of Heat Exchangers Used Is Switched)

An air conditioning device equipped with a plurality of outdoor heat exchangers increases the number of outdoor heat exchangers used when the capacity requested by the indoor unit increases or the air conditioning load increases due to a change in outside air temperature, and decreases the number of outdoor heat exchangers used when the capacity requested by the indoor unit decreases or the air conditioning load decreases due to a change in outside air temperature. For example, in the cooling operation, the number of outdoor heat exchangers used functioning as condensers is increased or decreased in accordance with an increase or decrease in number of indoor units performing a cooling operation, and in the heating operation, the number of outdoor heat exchangers used functioning as evaporators is increased or decreased in accordance with an increase or decrease in number of indoor units performing a heating operation. Further, in the cooling-dominated operation or heating-dominated operation, the number of outdoor heat exchangers used functioning as condensers or evaporators is increased or decreased in accordance with both of an increase or decrease in number of indoor units performing a cooling operation and an increase or decrease in number of indoor units performing a heating operation.

Here, when the number of outdoor heat exchangers used is increased, the condensing capacity or evaporating capacity of the outdoor heat exchangers may exceed a requested capacity to a large extent due to the increase in the number of outdoor heat exchangers. Further, when the number of outdoor heat exchangers used is decreased, the condensing capacity or evaporating capacity of the outdoor heat exchangers may fall below a requested capacity to a large extent due to the decrease in the number of outdoor heat exchangers. If the excess or shortage of the capacity is caused when the number of outdoor heat exchangers used is increased or decreased in such a manner, the air conditioning device decreases the number of outdoor heat exchangers used in the case of the excess of the capacity, and increases the number of outdoor heat exchangers used in the case of the shortage of the capacity, thereby causing a possibility that the increase or decrease in the number of outdoor heat exchangers used is repeated frequently.

For example, with reference to Fig. 1, when the air conditioning device 10 is performing a cooling operation using one outdoor heat exchanger, a flow path switching valve (first four-way valve 22) of an outdoor heat exchanger to be used (first outdoor heat exchanger 24) is switched such that the inlet of the first outdoor heat exchanger 24 is connected to the refrigerant discharge side of the compressor 21 (the port a and the port b communicate with each other), and a flow path switching valve (second four-way valve 23) of an outdoor heat exchanger not used (second outdoor heat exchanger 25) is switched such that the outlet of the second outdoor heat exchanger is connected to the refrigerant suction side of the compressor 21 (the port f and the port g communicate with each other). As a result, if the increase or decrease in the number of outdoor heat exchangers used is repeated frequently, the flow path switching valve on the outdoor heat exchanger side that switches between use and non-use (in this example, the second four-way valve 23 of the second outdoor heat exchanger 25) is frequently switched, and thus noise associated with the operation of the flow path switching valve may be generated or the deterioration of the flow path switching valve may be accelerated, resulting in reduction in reliability.

When the outdoor heat exchanger functions as a condenser, the condensing capacity of the outdoor heat exchanger increases or decreases in accordance with the increase or decrease in number of outdoor heat exchangers used, and a condensation temperature varies in accordance with the increase or decrease in the condensing capacity of the outdoor heat exchanger. More specifically, when the condensing capacity increases, the condensation temperature is lowered, and when the condensing capacity decreases, the condensation temperature rises. For example, when the air conditioning device is performing a cooling-dominated operation, the indoor heat exchanger of the indoor unit performing a heating operation functions as a condenser. Thus, if the increase or decrease in the condensing capacity of the outdoor heat exchanger is repeated by repeating the increase or decrease in number of outdoor heat exchangers used, the condensation temperature in the indoor heat exchanger of that indoor unit varies and the lowering and rise of the heating capacity of that indoor unit is repeated, and thus a stable heating operation cannot be continued.

On the other hand, when the outdoor heat exchanger functions as an evaporator, the evaporating capacity of the outdoor heat exchanger increases or decreases in accordance with the increase or decrease in number of outdoor heat exchangers used, and an evaporation temperature varies along with the increase or decrease in the evaporating capacity of the outdoor heat exchanger. More specifically, when the evaporating capacity increases, the evaporation temperature rises, and if the evaporating capacity decreases, the evaporation temperature is lowered. For example, when the air conditioning device is performing a heating-dominated operation, the indoor heat exchanger of the indoor unit performing a cooling operation functions as an evaporator. Thus, if the increase or decrease in the evaporating capacity of the outdoor heat exchanger is repeated by repeating the increase or decrease in number of outdoor heat exchangers used, the evaporation temperature in the indoor heat exchanger of that indoor unit varies and the lowering and rise of the cooling capacity of that indoor unit is repeated, and thus a stable heating operation cannot be continued.

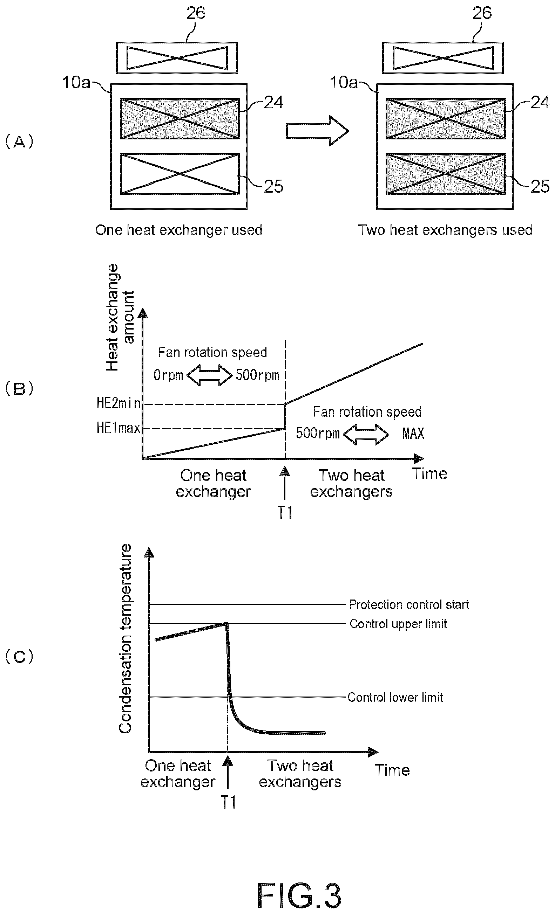

As an example, Fig. 3 shows a relationship between the number of outdoor heat exchangers used that are performing a cooling-dominated operation, and the heat exchange amount of the outdoor heat exchanger (condensing capacity) and the condensation temperature of the refrigerant in the outdoor heat exchanger before and after the increase in the number of outdoor heat exchangers used. (A) is a schematic diagram when the number of outdoor heat exchangers used is increased from one to two. The outdoor heat exchanger used is hatched in the diagram. (B) is a diagram showing an example of a relationship between the number of outdoor heat exchangers used and the heat exchange amount. (C) is a diagram showing an example of a change in condensation temperature of the refrigerant flowing into the outdoor heat exchanger when the number of outdoor heat exchangers used is increased from one to two.

The heat exchange amount of the outdoor heat exchanger can be generally obtained on the basis of a refrigerant flowing amount in the outdoor heat exchanger, the volume of each outdoor heat exchanger, a blast volume by the outdoor fan (product of the number of outdoor fans and a rotation speed), and a ratio of the air volume flowing into each outdoor heat exchanger to the blast volume.

Here, the ratio of the air volume flowing into each outdoor heat exchanger differs depending on the number of outdoor fans or the arrangement layout thereof for the two outdoor heat exchangers. In this embodiment, the two outdoor heat exchangers 24 and 25 are respectively disposed on the windward side and the leeward side for one outdoor fan 26 as shown in (A) of Fig. 3, and the blast volume sent from the outdoor fan 26 is distributed to the outdoor heat exchangers 24 and 25 at a predetermined rate. In this example, a blast volume ratio between the first outdoor heat exchanger 24 located on the windward side and the second outdoor heat exchanger 25 located on the leeward side is 3:1 (0.75:0.25). Note that if two outdoor fans are installed so as to correspond to the respective outdoor heat exchangers, the blast volume ratio is 1:1 (0.5:0.5). As shown in (B) of Fig. 3, the heat exchange amount of the outdoor heat exchanger increases as the rotation speed of the outdoor fan becomes higher.

In such a manner, the heat exchange amount of the outdoor heat exchanger increases or decreases mainly in accordance with the number of outdoor heat exchangers used and the blast volume of the outdoor fan. In the following description, the product of the number of outdoor heat exchangers used and the rotation speed of the outdoor fan will be also referred to as an integrated value of the number of heat exchangers and the rotation speed for evaluating the magnitude of the heat exchange amount [number·rpm].

The rotation speed of the outdoor fan may differ between the case where the outdoor heat exchanger is caused to function as a condenser and the case where it is caused to function as an evaporator. Further, the rotation speed may be set to different values depending on the number of outdoor heat exchangers used. The rotation speed of the outdoor fan is not limited to a fixed value and may be variably controlled within any rotation speed range.

An example case will be described, in which when the number of outdoor heat exchangers used functioning as condensers is one, the control range of the rotation speed of the outdoor fan is 0 to 500 rpm, and when the number of outdoor heat exchangers used is two, the control range of the rotation speed of the outdoor fan is from 500 rpm to the maximum value of the rotation speed of the outdoor fan.

(C) of Fig. 3 is an explanatory diagram showing an example of a temporal change in the condensation temperature of the refrigerant in the outdoor heat exchanger functioning as a condenser, showing a state in which the rotation speed of the compressor is kept constant and the number of outdoor heat exchangers used is switched from one to two at time T1. In the diagram, the control upper limit is a reference temperature for determining whether or not the control device 90 needs to increase the number of outdoor heat exchangers used. The control upper limit is set to a temperature lower than a protection control start temperature by a predetermined temperature so as not to start the protection control in which the condensation temperature reaches the protection control start temperature to stop the compressor. Further, the control lower limit is a reference temperature for determining whether or not the control device 90 needs to decrease the number of outdoor heat exchangers used. The control device 90 controls the rotation speed of the outdoor fan 26 such that the refrigerant temperature detected by the first heat exchange temperature sensor 56 or the second heat exchange temperature sensor 57 is a temperature between the control lower limit and the control upper limit.

When one outdoor heat exchanger cannot keep the condensation temperature equal to or lower than the control upper limit due to the shortage of the condensing capacity, the control device 90 increases the number of outdoor heat exchangers used from one to two (time T1 in (C) of Fig. 3). At that time, as shown in (B) of Fig. 3, assuming that the maximum value of the heat exchange amount of one outdoor heat exchanger immediately before the increase is HE1max, and the minimum value of the heat exchange amount of two outdoor heat exchangers immediately after the increase is HE2min, the integrated value of the number of heat exchangers and the rotation speed of the heat exchange amount HE1max of the outdoor heat exchanger immediately before the increase is 500 [number·rpm] (one × 500 rpm), whereas the integrated value of the number of heat exchangers and the rotation speed of the heat exchange amount HE2min of the outdoor heat exchangers immediately after the increase is 1000 [number·rpm] (two × 500 rpm). Therefore, as shown in (B) of Fig. 3, the heat exchange amount of the outdoor heat exchanger suddenly rises immediately after the increase in the number of outdoor heat exchangers used, and largely exceeds the requested condensing capacity.

When the heat exchange amount (condensing capacity) of the outdoor heat exchanger immediately after the increase in the number of outdoor heat exchangers used is excessively larger than the requested condensing capacity, if the rotation speed of the outdoor fan is the same before and after the increase in the number of outdoor heat exchangers used, the condensation temperature of the refrigerant in the outdoor heat exchanger is likely to suddenly decrease. For example, as shown in (C) of Fig. 3, when the number of outdoor heat exchangers used is increased from one to two, if the heat exchange amount of the outdoor heat exchanger is excessively large after the increase in the number of outdoor heat exchangers used, the condensation temperature of the refrigerant in the outdoor heat exchanger is likely to suddenly decrease from the control upper limit (for example, 54.5°C) to the control lower limit (for example, 42°C) or lower. If the state in which the condensation temperature is equal to or lower than the control lower limit continues in a predetermined time, it is necessary to switch the number of outdoor heat exchangers used to one again in order to increase the condensation temperature of the refrigerant. Meanwhile, since the heat exchange amount is inherently lacking when the number of outdoor heat exchangers used is one, the condensation temperature reaches the stable upper limit immediately after the number of outdoor heat exchangers used is switched to one, which needs to switch the number of outdoor heat exchangers used to two again.

In such a manner, when the condensing capacity of the outdoor heat exchangers exceeds a requested capacity to a large extent due to the increase in number of outdoor heat exchangers, the increase or decrease in the number of outdoor heat exchangers used may be repeated frequently. In this case, since the four-way valve is switched in accordance with the increase or decrease in number of outdoor heat exchangers used, an operating sound thereof is generated frequently to become noise. In addition, the four-way valve is operated frequently, resulting in a problem of faster deterioration. Moreover, the capacity change of the outdoor heat exchanger is repeated frequently, resulting in a problem that the temperature of the air conditioning space is not stabilized and comfort is deteriorated. For example, if the condensing capacity of the outdoor heat exchanger functioning as a condenser changes in the cooling-dominated operation, the air conditioning control of the heating device is affected.

Those problems may occur similarly not only when the number of outdoor heat exchangers used is increased but also when the number of outdoor heat exchangers used is decreased. In other words, when the number of outdoor heat exchangers used is decreased from two to one, the condensing capacity of the outdoor heat exchanger is considerably reduced, so that the condensation temperature of the refrigerant considerably rises and may exceed the stable upper limit. In this case, when the number of outdoor heat exchangers used is increased again, since the heat exchange amount is excessive with the two outdoor heat exchangers, the condensation temperature reaches the stable lower limit even after the number of outdoor heat exchangers used is switched to two, which causes a necessity to switch the number of outdoor heat exchangers used to one.

Note that the problems described above may occur similarly not only when the cooling-dominated operation is being performed but also when the heating-dominated operation is being performed.

In this regard, the air conditioning device 10 of this embodiment suppresses the occurrence of noise associated with a frequent increase or decrease in the number of outdoor heat exchangers used, the reduction in reliability, and the deterioration of comfort by optimizing the rotation speed of the outdoor fan 26. Hereinafter, the control device 90 that controls the drive of the outdoor fan 26 will be described in detail.

### [Details of Control Device of This Embodiment]

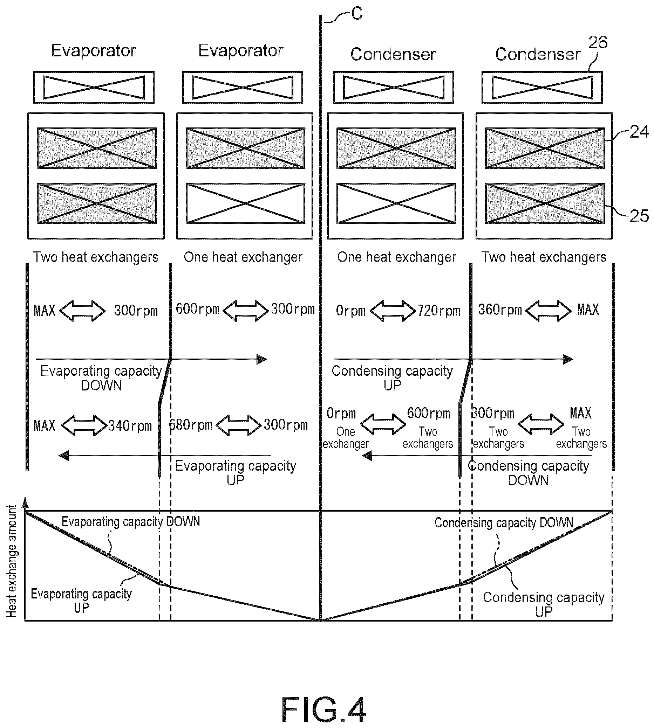

Fig. 4 is a schematic diagram showing a relationship between the number of outdoor heat exchangers used (first outdoor heat exchanger 24 and second outdoor heat exchanger 25) and the control range of the rotation speed of the outdoor fan 26.

Note that Fig. 4 shows, on the right side of the center thick line C, the control range of the rotation speed of the outdoor fan 26 when the number of outdoor heat exchangers used functioning as condensers is switched, and on the left side of the thick line C, a relationship between the number of outdoor heat exchangers used functioning as evaporators and the control range of the rotation speed of the outdoor fan 26. Here, described will be given below assuming that the rotation speed of the compressor 21 is constant.

When the outdoor heat exchanger functions as a condenser, the rotation speed of the outdoor fan 26 is controlled within the control range such that the condensation temperature falls between the control upper limit and the control lower limit shown in (C) of Fig. 3. In the example shown in Fig. 4, the control range of the rotation speed of the outdoor fan 26 when the number of outdoor heat exchangers used is increased is 0 to 720 rpm with one outdoor heat exchanger and is 360 rpm to the maximum rotation speed (max) with two outdoor heat exchangers. Further, the control range of the rotation speed of the outdoor fan 26 when the number of outdoor heat exchangers used is decreased is 300 rpm to the maximum rotation speed (max) with two outdoor heat exchangers and is 0 to 600 rpm with one outdoor heat exchanger. In other words, when the condensation temperature cannot be set to be the control upper limit or lower due to the shortage of the condensing capacity even after the rotation speed of the outdoor fan 26 reaches the upper limit value, and when the number of outdoor heat exchangers used is increased from one to two in order to increase the condensing capacity, the rotation speed of the outdoor fan 26 immediately before the increase is set to 720 rpm, and the rotation speed of the outdoor fan 26 immediately after the increase is set to 360 rpm. Further, when the number of outdoor heat exchangers used is decreased from two to one because the condensation temperature does not fall between the control upper limit and the control lower limit even after the rotation speed of the outdoor fan 26 reaches the lower limit value, the rotation speed of the outdoor fan 26 immediately before the decrease is set to 300 rpm, and the rotation speed of the outdoor fan 26 immediately after the decrease is set to 600 rpm.

Meanwhile, similarly, when the outdoor heat exchanger functions as an evaporator, in the example shown in Fig. 4, the control range of the rotation speed of the outdoor fan 26 when the number of outdoor heat exchangers used is increased is 300 to 680 rpm with one outdoor heat exchanger and is 340 rpm to the maximum rotation speed (max) with two outdoor heat exchangers. Further, the control range of the rotation speed of the outdoor fan 26 when the number of outdoor heat exchangers used is decreased is 300 rpm to the maximum rotation speed (max) with two outdoor heat exchangers and is 300 to 600 rpm with one outdoor heat exchanger. In other words, the rotation speed of the outdoor fan 26 immediately before the increase in the number of outdoor heat exchangers used from one to two is set to 680 rpm, and the rotation speed of the outdoor fan 26 immediately after the increase is set to 340 rpm. The rotation speed of the outdoor fan 26 immediately before the decrease in the number of outdoor heat exchangers used from two to one is set to 300 rpm, and the rotation speed of the outdoor fan 26 immediately after the increase is set to 600 rpm.

In the rotation speed of the outdoor fan 26 before and after the increase or decrease in the number of outdoor heat exchangers used, the rotation speed before the number of outdoor heat exchangers is changed is set to twice the rotation speed after the number of outdoor heat exchangers is changed, but the present invention is not limited thereto. As will be described later, the rotation speed before the number of outdoor heat exchangers is changed may be set to be less than twice the rotation speed after the number of outdoor heat exchangers is changed. Note that the lower limit value of the control rotation speed of the outdoor fan 26 is not set to 0 rpm when the outdoor heat exchanger is caused to function as an evaporator. This is because the refrigerant in the liquid state is prevented from being sucked into the compressor 21 before being completely evaporated (liquid back) in the outdoor heat exchanger.

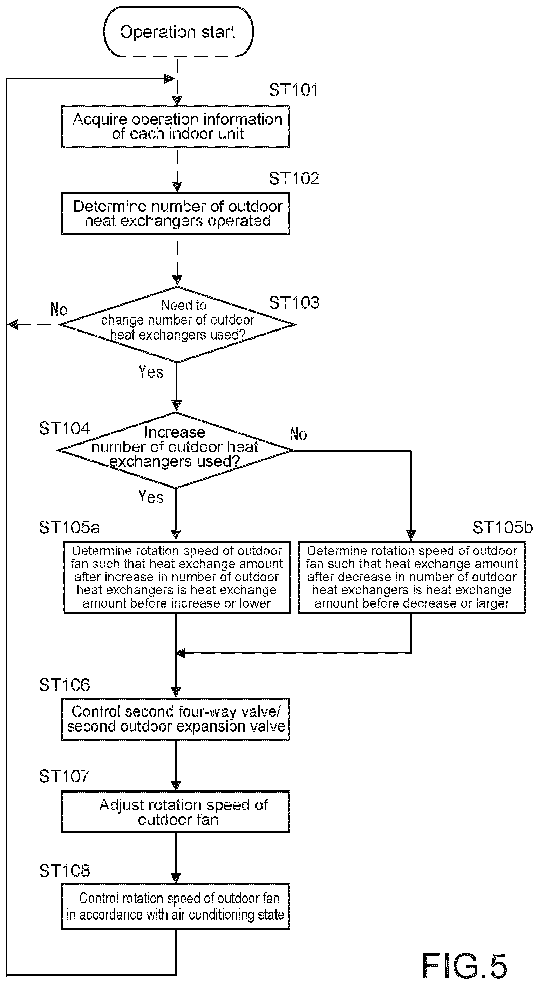

Fig. 5 is a flowchart showing an example of a processing procedure executed by the control device 90 in the air conditioning device 10 of this embodiment. First, the case where the outdoor heat exchanger functions as a condenser will be described as an example.

### (Case Where Outdoor Heat Exchanger Functions As Condenser)

When the operation of the air conditioning device 10 is started, the control device 90 acquires operation information of the indoor units 8a to 8c via the communication section 93 (Step 101). The information of the indoor units 8a to 8c is information relating to the air conditioning states of the indoor units 8a to 8c, and includes, for example, an operation mode such as "cooling" or "heating" of the indoor units 8a to 8c, and an air conditioning capacity such as a cooling capacity or a heating capacity requested from the indoor units 8a to 8c. The operation mode of the air conditioning device 10 in which the outdoor heat exchangers (first outdoor heat exchanger 24 and second outdoor heat exchanger 25) function as condensers is a full cooling operation or a cooling-dominated operation.

Sequentially, the control device 90 determines the number of outdoor heat exchangers used on the basis of the operation information of the indoor units 8a to 8c acquired in Step 101 (Step 102). In this embodiment, if the air conditioning capacity requested from the indoor units 8a to 8c is covered by the heat exchange amount (condensing capacity) of one outdoor heat exchanger, only the first outdoor heat exchanger 24 is used, and if the air conditioning capacity is not covered by the heat exchange amount (condensing capacity) of one outdoor heat exchanger, both the first outdoor heat exchanger 24 and the second outdoor heat exchanger 25 are used.

When one outdoor heat exchanger is used, the first four-way valve 22 is switched such that the port a and the port b communicate with each other, and the second four-way valve 23 is switched such that the port f and the port g communicate with each other (the second outdoor expansion valve 41 is fully closed). Thus, only the first outdoor heat exchanger 24 functions as a condenser, and the use of the second outdoor heat exchanger 25 is stopped. The rotation speed of the outdoor fan 26 is controlled such that the condensation temperature of the refrigerant in the first outdoor heat exchanger 24 is a temperature between the control lower limit and the control upper limit shown in (C) of Fig. 3.

Meanwhile, when two outdoor heat exchangers are used, the first four-way valve 22 is switched such that the port a and the port b communicate with each other, and the second four-way valve 23 is switched such that the port e and the port f communicate with each other. As a result, both the first outdoor heat exchanger 24 and the second outdoor heat exchanger 25 function as condensers. The rotation speed of the outdoor fan 26 is controlled such that the condensation temperature of the refrigerant in the first outdoor heat exchanger 24 and the second outdoor heat exchanger 25 is a temperature between the control lower limit and the control upper limit shown in (C) of Fig. 3.

The control device 90 determines whether to need to change the number of outdoor heat exchangers used, for example, due to the variations in the air conditioning capacity requested by the indoor unit (Step 103). If the control device 90 determines that the change in the number of outdoor heat exchangers used is not needed (No in Step 103), the operation is continued with the current number of outdoor heat exchangers used. Meanwhile, if the control device 90 determines that the change in the number of outdoor heat exchangers used is needed (Yes in Step 103), the control device 90 determines whether to increase the number of outdoor heat exchangers used in accordance with on the requested air conditioning capacity (Step 104).

As described above, the rotation speed of the outdoor fan 26 is controlled within the control range determined on the basis of the number of outdoor heat exchangers used such that the condensation temperature falls between the control upper limit and the control lower limit shown in (C) of Fig. 3. For example, in the case of using one outdoor heat exchanger, if the condensation temperature of the refrigerant in the first outdoor heat exchanger 24 falls between the control upper limit and the control lower limit, the number of outdoor heat exchangers used is not increased and the operation is continued using the current number of outdoor heat exchangers used (one outdoor heat exchanger). To the contrary, if the rise of the condensation temperature of the refrigerant cannot be suppressed to be equal to or lower than the control upper limit even when the rotation speed of the outdoor fan 26 is the upper limit value (720 rpm), it is determined that the number of outdoor heat exchangers used needs to be increased (the condensing capacity needs to be increased) (Yes in Step 104).

Meanwhile, in the case of using two outdoor heat exchangers, if the condensation temperature of the refrigerant in the first and second outdoor heat exchangers 24 and 25 falls between the control upper limit and the control lower limit, the number of outdoor heat exchangers used is not decreased and the operation is continued using the current number of outdoor heat exchangers used (two outdoor heat exchangers). To the contrary, if the decrease in the condensation temperature of the refrigerant cannot be set to be equal to or larger than the control lower limit even when the rotation speed of the outdoor fan 26 is the lower limit value (300 rpm), it is determined that the number of outdoor heat exchangers used needs to be decreased (the condensing capacity needs to be decreased) (No in Step 104).

When it is determined that the number of outdoor heat exchangers used is increased (Yes in Step 104), the control device 90 determines the rotation speed of the outdoor fan 26 such that the heat exchange amount in the outdoor heat exchanger after the increase in the number of outdoor heat exchangers used is equal to or lower than the heat exchange amount in the outdoor heat exchanger before the increase in the number of outdoor heat exchangers used (Step 105a). As a result, the condensation temperature of the refrigerant in the outdoor heat exchanger is prevented from suddenly decreasing immediately after the increase in the number of outdoor heat exchangers used.

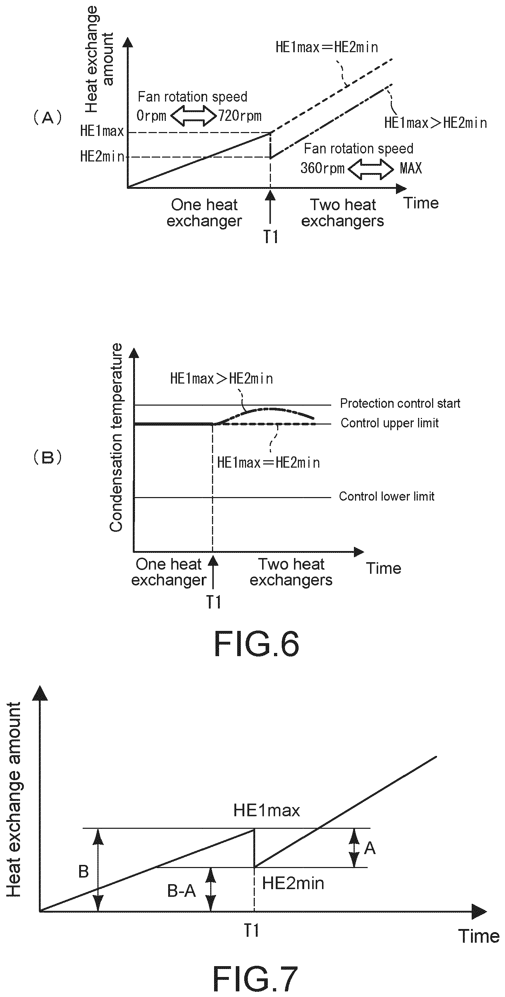

Fig. 6 is a diagram for describing an action of the air conditioning device 10 obtained by setting the rotation speed of the outdoor fan 26 in the control range shown in Fig. 4, showing a relationship between the number of outdoor heat exchangers used, and the heat exchange amount (condensing capacity) of the outdoor heat exchanger and the condensation temperature of the refrigerant in the outdoor heat exchanger before and after the increase in the number of outdoor heat exchangers used. (A) is a diagram showing an example of a relationship between the number of outdoor heat exchangers used and the heat exchange amount thereof. The heat exchange amount of the outdoor heat exchanger increases as the rotation speed of the outdoor fan 26 becomes higher. (B) is a diagram showing an example of the change in condensation temperature of the refrigerant flowing into the outdoor heat exchanger. In this example, the number of outdoor heat exchangers used is changed from one to two at time T1.

In Step 105a, as shown in (A) of Fig. 6, assuming that the maximum value (HE1max) of the heat exchange amount in the outdoor heat exchanger before the increase in the number of outdoor heat exchangers used is a first heat exchange amount and that the minimum value (HE2min) of the heat exchange amount in the outdoor heat exchanger after the increase in the number of outdoor heat exchangers used is a second heat exchange amount, the control device 90 determines the rotation speed of the outdoor fan 26 such that the first heat exchange amount is equal to or larger than the second heat exchange amount (HE1max ≥HE2min). In (A) of Fig. 6, the broken line represents the case where the first heat exchange amount is the same as the second heat exchange amount (HE1max = HE2min), and the dash-double-dot line represents the case where the first heat exchange amount is larger than the second heat exchange amount (HE1max > HE2min).

As shown in (B) of Fig. 6, if the first heat exchange amount is the same as the second heat exchange amount (HE1max = HE2min), the condensation temperature can be kept constant without change before and after the increase in the number of outdoor heat exchangers used. Further, if the first heat exchange amount is larger than the second heat exchange amount (HE1max > HE2min), the condensation temperature of the refrigerant in the outdoor heat exchanger temporarily rises and then converges to the original condensation temperature as indicated by the dash-double-dot line as shown in (B) of Fig. 6. In such a manner, the rotation speed of the outdoor fan 26 is controlled to obtain the heat exchange amount that meets the relationship of HE1max ≥HE2min, so that the condensation temperature of the refrigerant in the outdoor heat exchanger can be prevented from suddenly decreasing due to the excessive condensing capacity as shown in (C) of Fig. 3.

Regarding the relationship between the number of outdoor heat exchangers used and the heat exchange amount thereof, as shown in Fig. 7, assuming that a difference between the first heat exchange amount (HE1max) and the second heat exchange amount (HE2min) is A and the magnitude of the first heat exchange amount (the total amount of change in heat exchange amount when the number of outdoor heat exchangers used is one) is B, the second heat exchange amount is represented as (B-A). When the value obtained by dividing the second heat exchange amount by the first heat exchange amount is assumed as a heat exchange amount change ratio ((B-A)/B), the control device 90 determines the rotation speed of the outdoor fan 26 such that the heat exchange amount change ratio is equal to or lower than a predetermined first threshold.

If the first threshold is larger than 1, the second heat exchange amount is larger than the first heat exchange amount (HE1max < HE2min), and as shown in (B) and (C) of Fig. 3, the heat exchange amount of the outdoor heat exchanger suddenly increases immediately after the increase in the number of outdoor heat exchangers used and exceeds the requested condensing capacity to a large extent, which may result in a sudden decrease in the condensation temperature. Therefore, it is favorable that the first threshold is equal to or smaller than 1. Further, it is more favorable that the first threshold is 1 (HE1max = HE2min). In this case, the heat exchange amount does not vary before and after the increase or decrease in the number of outdoor heat exchangers used, and thus the air conditioning capacity exhibited does not vary and is stable.

Further, the control device 90 determines the rotation speed of the outdoor fan 26 such that the heat exchange amount change ratio ((B-A)/B) is equal to or larger than a predetermined second threshold that is a smaller value than the first threshold. If the first threshold is less than 1, the second heat exchange amount is smaller than the first heat exchange amount (dash-double-dot line in (A) of Fig. 6), and thus the condensation temperature of the refrigerant in the outdoor heat exchanger immediately after the increase in the number of outdoor heat exchangers used rises as compared to the case before the increase in the number of outdoor heat exchangers (dash-double-dot line in (B) of Fig. 6). At that time, the rise range of the condensation temperature increases as the difference A between the first heat exchange amount and the second heat exchange amount becomes larger. When the condensation temperature reaches a predetermined high-pressure protection control start temperature as shown in (C) of Fig. 3 or (B) of Fig. 6, the compressor 21 is stopped and the operation of the air conditioning device 10 is stopped for the protection of the compressor 21. For that reason, it is favorable that the second threshold is set to any value that can suppress the condensation temperature to be equal to or lower than the high-pressure protection control start temperature (for example, 57.6°C), and is, for example, 0.5 or more.

Further, in this embodiment, when the number of outdoor heat exchangers used functioning as condensers is increased, the upper limit value of the rotation speed of the outdoor fan 26 when the number of outdoor heat exchangers used is one is 720 rpm, and the lower limit value of the rotation speed of the outdoor fan 26 when the number of outdoor heat exchangers used is two is 360 rpm (see Fig. 4). Therefore, the integrated value of the number of heat exchangers and the rotation speed of the heat exchange amount when the number of outdoor heat exchangers used is one is 720 [number·rpm] (one × 720 rpm), and the integrated value of the number of heat exchangers and the rotation speed of the heat exchange amount when the number of outdoor heat exchangers used is two is also 720 [number·rpm] (two × 360 rpm), and thus even if the number of outdoor heat exchangers used is increased from one to two, the first heat exchange amount and the second heat exchange amount can be set to the same value (HE1max = HE2min, heat exchange amount change ratio: (B-A)/B = 1).

Note that values measured in advance in tests or the like are used for the first heat exchange amount (HE1max), the second heat exchange amount (HE2min), the rotation speed of the outdoor fan 26 shown in Fig. 4, and the second threshold. Those measured values are stored in the storage section 92 of the control device 90 and are referred to when the number of outdoor heat exchangers used is changed.

Further, in addition to the method of obtaining the heat exchange amount of the outdoor heat exchanger by tests described above, the control device 90 may use an evaluation index determined on the basis of the volume of each outdoor heat exchanger (the first outdoor heat exchanger 24 and the second outdoor heat exchanger 25), the blast volume by the outdoor fan 26, and the ratio of the air volume flowing into each outdoor heat exchanger to the blast volume. In this case as well, if information relating to the volume of the outdoor heat exchanger and the ratio of the air volume is stored in advance in the storage section 92, the heat exchange amount of the outdoor heat exchanger can be estimated from the number of outdoor heat exchangers used and the rotation speed of the outdoor fan 26. Thus, the heat exchange amount change ratio ((B-A)/B) may be calculated from such an estimated value, and the rotation speed of the outdoor fan 26 may be determined such that the calculated value is equal to or smaller than 1 (first threshold).

Furthermore, the number of outdoor heat exchangers used may be increased before the heat exchange amount of the outdoor heat exchanger reaches the maximum value (HE1max). In this case, the heat exchange amount change ratio ((B'-A)/B' (B' is a heat exchange amount immediately before the increase in the number of outdoor heat exchangers used)) may be calculated on the basis of the heat exchange amount estimated as described above, and the rotation speed of the outdoor fan 26 before and after the increase in the number of outdoor heat exchangers used may be controlled such that the change ratio is, for example, 0.5 or more and 1 or less.

Further, the heat exchange amount ratio can be set to 1 by selecting the first heat exchange amount B capable of selecting a fan rotation speed in which the rotation speed of the outdoor fan 26 is just 1/2 times (in the increase in the number of outdoor heat exchangers used). Thus, if such a rotation speed can be selected, the number of outdoor heat exchangers used may be increased before the first heat exchange amount reaches the maximum value (HE1max). Further, if the rotation speed of the outdoor fan 26 can be selected only by a predetermined step, the number of outdoor heat exchangers used may be increased by a step (rotation speed) at which the heat exchange amount ratio has a value closest to 1.

As described above, after determining the rotation speed of the outdoor fan 26 in Step 105a, the control device 90 switches the second four-way valve 23 such that the port e and the port f communicate with each other (Step 106) and also adjusts the degree of opening of the second outdoor expansion valve 41 to be the same as the degree of opening of the first outdoor expansion valve 40. Furthermore, the control device 90 adjusts the rotation speed of the outdoor fan 26 to the lower limit value of the rotation speed (360 rpm) provided when the number of outdoor heat exchangers used is two (Step 107). As a result, the number of outdoor heat exchangers used is changed to two. Afterwards, the control device 90 controls the rotation speed of the outdoor fan 26 in the range from 360 rpm to the maximum value such that the condensation temperature is a temperature between the control upper limit and the control lower limit (Step 108).

Meanwhile, in the case where the two outdoor heat exchangers are used as condensers and the full cooling operation or the cooling-dominated operation is being performed, when it is determined that the number of outdoor heat exchangers used needs to be decreased due to the requested air conditioning capacity, for example, the number of indoor units performing a heating operation is increased (No in Step 104), the control device 90 determines the rotation speed of the outdoor fan 26 such that the heat exchange amount in the outdoor heat exchanger after the decrease in the number of outdoor heat exchangers used is equal to or larger than the heat exchange amount in the outdoor heat exchanger before the decrease in the number of outdoor heat exchangers used (Step 105b).

In Step 105b, as shown in Fig. 7, assuming that the maximum value (HE1max) of the heat exchange amount in the outdoor heat exchanger after the decrease in the number of outdoor heat exchangers used is a first heat exchange amount and that the minimum value (HE2min) of the heat exchange amount in the outdoor heat exchanger before the decrease in the number of outdoor heat exchangers used is a second heat exchange amount, the control device 90 determines the rotation speed of the outdoor fan 26 such that the first heat exchange amount is equal to or larger than the second heat exchange amount (HE1max ≥HE2min) when the control device 90 determines a decrease in the number of outdoor heat exchangers used. As a result, it is possible to keep the condensation temperature of the refrigerant in the outdoor heat exchanger constant in the decrease in the number of outdoor heat exchangers used.

When the number of outdoor heat exchangers used is decreased, similarly to the case where the number of outdoor heat exchangers used is increased, assuming that the value obtained by dividing the second heat exchange amount by the first heat exchange amount is a heat exchange amount change ratio ((B-A)/B), the control device 90 determines the rotation speed of the outdoor fan 26 such that the heat exchange amount change ratio is the second threshold or more and the first threshold or less (in this embodiment, 0.5 or more and 1 or less). As a result, it is possible to prevent the condensation temperature of the refrigerant in the outdoor heat exchanger from suddenly decreasing when the number of outdoor heat exchangers used is decreased, and to maintain a high pressure of the outdoor heat exchanger functioning as a condenser.

In this embodiment, when the number of outdoor heat exchangers functioning as condensers is decreased, the lower limit value of the rotation speed of the outdoor fan 26 when the number of outdoor heat exchangers used is two is 300 rpm, and the upper limit value of the rotation speed of the outdoor fan 26 when the number of outdoor heat exchangers used is one is 600 rpm (see Fig. 4). Therefore, the integrated value of the number of heat exchangers and the rotation speed of the heat exchange amount when the number of outdoor heat exchangers used is two is 600 [number·rpm] (two × 300 rpm), and the integrated value of the number of heat exchangers and the rotation speed of the heat exchange amount when the number of outdoor heat exchangers used is one is also 600 [number·rpm] (one × 600 rpm), and thus when the number of outdoor heat exchangers used is decreased from two to one, the first heat exchange amount and the second heat exchange amount can be set to the same value (HE1max = HE2min, (B-A)/B = 1).

As described above, after determining the rotation speed of the outdoor fan 26 in Step 105b, the control device 90 switches the second four-way valve 23 such that the port f and the port g communicate with each other, and fully closes the second outdoor expansion valve 41 (Step 106). Furthermore, the control device 90 adjusts the rotation speed of the outdoor fan 26 to the upper limit value of the rotation speed (600 rpm) provided when the number of outdoor heat exchangers used is one (Step 107). As a result, the number of outdoor heat exchangers used is changed to one. Afterwards, the control device 90 controls the rotation speed of the outdoor fan 26 in the range from 0 rpm to 600 rpm such that the condensation temperature is a temperature between the control upper limit and the control lower limit (Step 108). By repeating the above processing, the air conditioning device 10 continues the full cooling operation or the cooling-dominated operation.

### (Case Where Outdoor Heat Exchanger Functions As Evaporator)

Sequentially, the case where the outdoor heat exchanger functions as an evaporator will be described. The operation mode of the air conditioning device 10 in which the outdoor heat exchangers (first outdoor heat exchanger 24 and second outdoor heat exchanger 25) function as evaporators is a full heating operation or a heating-dominated operation. The control device 90 executes the processing according to the flowchart shown in Fig. 5 also in the full heating operation or the heating-dominated operation. Hereinafter, the portions different from those described above will be mainly described.

When one outdoor heat exchanger is used, the first four-way valve 22 is switched such that the port b and the port c communicate with each other, and the second four-way valve 23 is switched such that the port f and the port g communicate with each other (the second outdoor expansion valve 41 is fully closed). Thus, only the first outdoor heat exchanger 24 functions as an evaporator, and the use of the second outdoor heat exchanger 25 is stopped. The rotation speed of the outdoor fan 26 is controlled such that the evaporation temperature of the refrigerant in the outdoor heat exchanger is a temperature between the control lower limit and the control upper limit.

Meanwhile, when two outdoor heat exchangers are used, the first four-way valve 22 is switched such that the port b and the port c communicate with each other, and the second four-way valve 23 is switched such that the port f and the port g communicate with each other. As a result, both the first outdoor heat exchanger 24 and the second outdoor heat exchanger 25 function as evaporators. The rotation speed of the outdoor fan 26 is controlled such that the condensation temperature of the refrigerant in the first outdoor heat exchanger 24 and the second outdoor heat exchanger 25 is a temperature between the control lower limit and the control upper limit.

The control device 90 determines whether to need to change the number of outdoor heat exchangers used, for example, due to the variations in the air conditioning capacity requested by the indoor unit (Step 103). If the control device 90 determines that the change in the number of outdoor heat exchangers used is not needed (No in Step 103), the operation is continued with the current number of outdoor heat exchangers used. Meanwhile, if the control device 90 determines that the change in the number of outdoor heat exchangers used is needed (Yes in Step 103), the control device 90 determines whether to increase the number of outdoor heat exchangers used in accordance with the requested air conditioning capacity (Step 104).

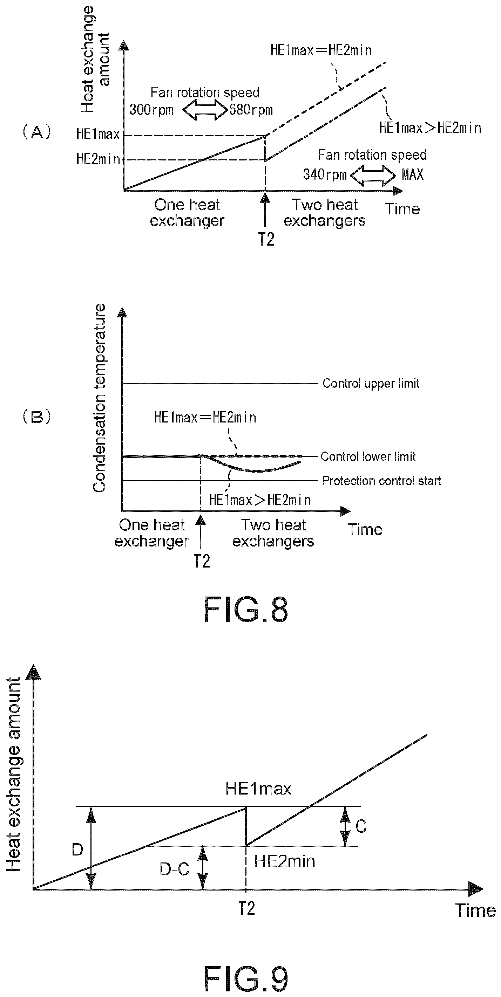

The rotation speed of the outdoor fan 26 is controlled within the control range determined on the basis of the number of outdoor heat exchangers used such that the evaporation temperature falls between the control upper limit and the control lower limit (see (B) of Fig. 8 to be described later). For example, in the case of using one outdoor heat exchanger, if the evaporation temperature of the refrigerant in the first outdoor heat exchanger 24 falls between the control upper limit and the control lower limit, the number of outdoor heat exchangers used is not increased and the operation is continued using the current number of outdoor heat exchangers used (one outdoor heat exchanger). To the contrary, if the decrease in the evaporation temperature of the refrigerant cannot be set to be equal to or larger than the control lower limit even when the rotation speed of the outdoor fan 26 is the upper limit value (680 rpm), it is determined that the number of outdoor heat exchangers used needs to be increased (the evaporating capacity needs to be increased) (Yes in Step 104).

Meanwhile, in the case of using two outdoor heat exchangers, if the evaporation temperature of the refrigerant in the first and second outdoor heat exchangers 24 and 25 falls between the control upper limit and the control lower limit, the number of outdoor heat exchangers used is not decreased and the operation is continued using the current number of outdoor heat exchangers used (two outdoor heat exchangers). To the contrary, if the evaporation temperature of the refrigerant cannot be suppressed to be equal to or lower than the control upper limit even when the rotation speed of the outdoor fan 26 is the lower limit value (300 rpm), it is determined that the number of outdoor heat exchangers used needs to be decreased (the evaporating capacity needs to be decreased) (No in Step 104).

When it is determined that the number of outdoor heat exchangers used is increased (Yes in Step 104), the control device 90 determines the rotation speed of the outdoor fan 26 such that the heat exchange amount in the outdoor heat exchanger after the increase in the number of outdoor heat exchangers used is equal to or lower than the heat exchange amount in the outdoor heat exchanger before the increase in the number of outdoor heat exchangers used (Step 105a). As a result, the evaporation temperature of the refrigerant in the outdoor heat exchanger is prevented from suddenly increasing immediately after the increase in the number of outdoor heat exchangers used.

Fig. 8 is a diagram for describing an action of the air conditioning device 10 obtained by setting the rotation speed of the outdoor fan 26 to the control range shown in Fig. 4, showing a relationship between the number of outdoor heat exchangers used, and the heat exchange amount (evaporating capacity) of the outdoor heat exchanger and the evaporation temperature of the refrigerant in the outdoor heat exchanger before and after the increase in the number of outdoor heat exchangers used. (A) is a diagram showing an example of a relationship between the number of outdoor heat exchangers used and the heat exchange amount thereof. The heat exchange amount of the outdoor heat exchanger increases as the rotation speed of the outdoor fan 26 becomes higher. (B) is a diagram showing an example of the change in evaporation temperature of the refrigerant flowing into the outdoor heat exchanger. In this example, the number of outdoor heat exchangers used is changed from one to two at time T2.

In Step 105a, as shown in (A) of Fig. 8, assuming that the maximum value (HE1max) of the heat exchange amount in the outdoor heat exchanger before the increase in the number of outdoor heat exchangers used is a first heat exchange amount and that the minimum value (HE2min) of the heat exchange amount in the outdoor heat exchanger after the increase in the number of outdoor heat exchangers used is a second heat exchange amount, the control device 90 determines the rotation speed of the outdoor fan 26 such that the first heat exchange amount is equal to or larger than the second heat exchange amount (HE1max ≥HE2min). In (A) of Fig. 8, the broken line represents the case where the first heat exchange amount is the same as the second heat exchange amount (HE1max = HE2min), and the dash-double-dot line represents the case where the first heat exchange amount is larger than the second heat exchange amount (HE1max > HE2min).

As shown in (B) of Fig. 8, if the first heat exchange amount is the same as the second heat exchange amount (HE1max = HE2min), the evaporation temperature can be kept constant without change before and after the increase in the number of outdoor heat exchangers used. Further, if the first heat exchange amount is the same as the second heat exchange amount (HE1max = HE2min), the evaporation temperature of the refrigerant in the outdoor heat exchanger temporarily decreases and then converges to the original evaporation temperature. In such a manner, the rotation speed of the outdoor fan 26 is controlled to obtain the heat exchange amount that meets the relationship of HE1max ≥HE2min, so that the evaporation temperature of the refrigerant in the outdoor heat exchanger can be prevented from suddenly increasing due to the excessive evaporating capacity.

Regarding the relationship between the number of outdoor heat exchangers used and the heat exchange amount thereof, as shown in Fig. 9, assuming that a difference between the first heat exchange amount (HE1max) and the second heat exchange amount (HE2min) is C and the magnitude of the first heat exchange amount (the total amount of change in heat exchange amount when the number of outdoor heat exchangers used is one) is D, the second heat exchange amount is represented as (D-C). When the value obtained by dividing the second heat exchange amount by the first heat exchange amount is assumed as a heat exchange amount change ratio ((D-C)/D), the control device 90 determines the rotation speed of the outdoor fan 26 such that the heat exchange amount change ratio is equal to or lower than a predetermined first threshold.

If the first threshold is larger than 1, the second heat exchange amount is larger than the first heat exchange amount (HE1max < HE2min), and the heat exchange amount of the outdoor heat exchanger suddenly increases immediately after the increase in the number of outdoor heat exchangers used and exceeds the requested evaporating capacity to a large extent, which may result in a sudden increase in the evaporation temperature. Therefore, it is favorable that the first threshold is equal to or smaller than 1, most favorable, 1.

Further, the control device 90 determines the rotation speed of the outdoor fan 26 such that the heat exchange amount change ratio ((D-C)/D) is equal to or larger than a predetermined second threshold that is a smaller value than the first threshold. If the first threshold is less than 1, the second heat exchange amount is smaller than the first heat exchange amount ((A) of Fig. 8), and thus the evaporation temperature of the refrigerant in the outdoor heat exchanger immediately after the increase in the number of outdoor heat exchangers used decreases as compared to the case before the increase in the number of outdoor heat exchangers ((B) of Fig. 6). At that time, the decrease range of the evaporation temperature increases as the difference C between the first heat exchange amount and the second heat exchange amount becomes larger. When the evaporation temperature reaches a predetermined low-pressure protection control start temperature, the operation of the air conditioning device 10 is stopped from the viewpoint of the low-pressure protection of the outdoor heat exchanger functioning as an evaporator. For that reason, it is favorable that the second threshold is set to any value that can suppress the evaporation temperature to be equal to or lower than a predetermined low-pressure protection control start temperature (for example, -30°C) and is, for example, 0.5 or more.

Meanwhile, in this embodiment, when the number of outdoor heat exchangers used functioning as evaporators is increased, the upper limit value of the rotation speed of the outdoor fan 26 when the number of outdoor heat exchangers used is one is 680 rpm, and the lower limit value of the rotation speed of the outdoor fan 26 when the number of outdoor heat exchangers used is two is 340 rpm (see Fig. 4). Therefore, the integrated value of the number of heat exchangers and the rotation speed of the heat exchange amount when the number of outdoor heat exchangers used is one is 680 [number·rpm] (one × 680 rpm), and the integrated value of the number of heat exchangers and the rotation speed of the heat exchange amount when the number of outdoor heat exchangers used is two is 680 [number·rpm] (two × 340 rpm), and thus if the number of outdoor heat exchangers used is switched from one to two, the first heat exchange amount and the second heat exchange amount can be set to the same value (HE1max = HE2min, (D-C)/D = 1).

As described above, after determining the rotation speed of the outdoor fan 26 in Step 105a, the control device 90 maintains the second four-way valve 23 such that the port f and the port g communicate with each other and gradually increases the degree of opening of the second outdoor expansion valve 41 from the closed state (Step 106). Furthermore, the control device 90 adjusts the rotation speed of the outdoor fan 26 to the lower limit value of the rotation speed (340 rpm) provided when the number of outdoor heat exchangers used is two (Step 107). As a result, the number of outdoor heat exchangers used is changed to two. Afterwards, the control device 90 controls the rotation speed of the outdoor fan 26 in the range from 340 rpm to the maximum value in accordance with the air conditioning state such that the evaporation temperature is a temperature between the control upper limit and the control lower limit (Step 108).

Meanwhile, in the case where the two outdoor heat exchangers are used as evaporators and the full heating operation or the heating-dominated operation is being performed, when it is determined that the number of outdoor heat exchangers used needs to be decreased due to the requested air conditioning capacity, for example, the number of indoor units performing a cooling operation is decreased (No in Step 104), the control device 90 determines the rotation speed of the outdoor fan 26 such that the heat exchange amount in the outdoor heat exchanger after the decrease in the number of outdoor heat exchangers used is equal to or larger than the heat exchange amount in the outdoor heat exchanger before the decrease in the number of outdoor heat exchangers used (Step 105b).

In Step 105b, as shown in Fig. 9, assuming that the maximum value (HE1max) of the heat exchange amount in the outdoor heat exchanger after the decrease in the number of outdoor heat exchangers used is a first heat exchange amount and that the minimum value (HE2min) of the heat exchange amount in the outdoor heat exchanger before the decrease in the number of outdoor heat exchangers used is a second heat exchange amount, the control device 90 determines the rotation speed of the outdoor fan 26 such that the first heat exchange amount is equal to or larger than the second heat exchange amount (HE1max ≥HE2min) when the control device 90 determines a decrease in the number of outdoor heat exchangers used. As a result, it is possible to keep the evaporation temperature of the refrigerant in the outdoor heat exchanger constant in the decrease in the number of outdoor heat exchangers used.

When the number of outdoor heat exchangers used is decreased, similarly to the case where the number of outdoor heat exchangers used is increased, assuming that the value obtained by dividing the second heat exchange amount by the first heat exchange amount is a heat exchange amount change ratio ((D-C)/D), the control device 90 determines the rotation speed of the outdoor fan 26 such that the heat exchange amount change ratio is the second threshold or more and the first threshold or less (in this embodiment, 0.5 or more and 1 or less). As a result, it is possible to prevent the evaporation temperature of the refrigerant in the outdoor heat exchanger from suddenly decreasing when the number of outdoor heat exchangers used is decreased, and to maintain a low pressure of the outdoor heat exchanger functioning as an evaporator.

In this embodiment, when the number of outdoor heat exchangers functioning as evaporators is decreased, the lower limit value of the rotation speed of the outdoor fan 26 when the number of outdoor heat exchangers used is two is 300 rpm, and the upper limit value of the rotation speed of the outdoor fan 26 when the number of outdoor heat exchangers used is one is 600 rpm (see Fig. 4). Therefore, the integrated value of the number of heat exchangers and the rotation speed of the heat exchange amount when the number of outdoor heat exchangers used is two is 600 [number·rpm] (two × 300 rpm), and the integrated value of the number of heat exchangers and the rotation speed of the heat exchange amount when the number of outdoor heat exchangers used is one is also 600 [number·rpm] (one × 600 rpm), and thus when the number of outdoor heat exchangers used is switched from two to one, the first heat exchange amount and the second heat exchange amount can be set to the same value (HE1max = HE2min, (D-C)/D = 1).

As described above, after determining the rotation speed of the outdoor fan 26 in Step 105b, the control device 90 maintains the second four-way valve 23 in the state in which the port e and the port f communicate with each other, and fully closes the second outdoor expansion valve 41 (Step 106). Furthermore, the control device 90 adjusts the rotation speed of the outdoor fan 26 to the upper limit value of the rotation speed (600 rpm) provided when the number of outdoor heat exchangers used is one (Step 107). As a result, the number of outdoor heat exchangers used is changed to one. Afterwards, the control device 90 controls the rotation speed of the outdoor fan 26 in the range from 300 rpm to 600 rpm in accordance with the air conditioning state such that the evaporation temperature is a temperature between the control upper limit and the control lower limit (Step 108). By repeating the above processing, the air conditioning device 10 continues the full heating operation or the heating-dominated operation.

As described above, according to this embodiment, when the number of outdoor heat exchangers used is increased, the rotation speed of the outdoor fan is determined such that the heat exchange amount of the outdoor heat exchanger after the increase in the number of outdoor heat exchangers used is equal to or lower than the heat exchange amount of the outdoor heat exchanger before the increase in the number of outdoor heat exchangers used, and when the number of outdoor heat exchangers used is decreased, the rotation speed of the outdoor fan is determined such that the heat exchange amount of the outdoor heat exchanger after the decrease in the number of outdoor heat exchangers used is equal to or larger than the heat exchange amount of the outdoor heat exchanger before the decrease in the number of outdoor heat exchangers used. This makes it possible to prevent sudden variations in condensation temperature or evaporation temperature of the refrigerant when the number of outdoor heat exchangers used is increased or decreased.

As a result, it is possible to prevent the comfort of the inhabitants from being deteriorated due to the reduction in heating performance or cooling performance in each indoor unit. Further, since it is possible to prevent sudden variations in condensation temperature or evaporation temperature when the number of outdoor heat exchangers used is increased or decreased, it is possible to inhibit a frequent switching operation for the number of outdoor heat exchangers used and thus prevent the reliability from being decreased due to noise caused by the operating sound of the flow path switching valve and the degradation thereof.

Although an embodiment of the present invention has been described above, the present invention is not limited only to the embodiment described above and it goes without saying that various modifications can be made.

For example, although the air conditioning device 10 including one outdoor unit 2a has been described as an example in the above embodiment, the present invention is also applicable to an air conditioning device including two or more outdoor units similarly.

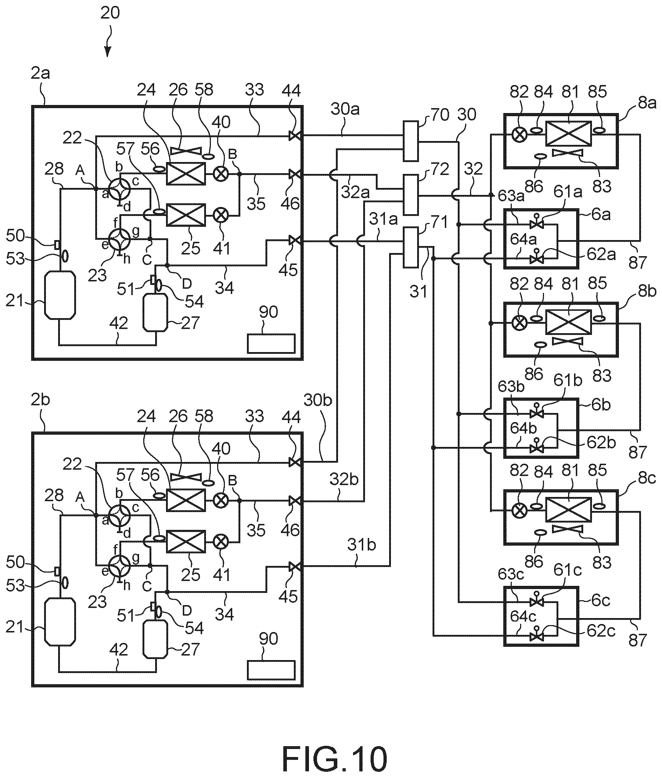

Fig. 10 is a refrigerant circuit diagram of an air conditioning device 20 including two outdoor units 2a and 2b and three indoor units 8a to 8c. In Fig. 10, the outdoor units 2a and 2b have the same configuration, and outdoor unit high-pressure gas pipes 33 of the respective outdoor units 2a and 2b are connected to a high-pressure gas pipe via stop valves 44, high-pressure gas diversion pipes 30a and 30b, and a diversion unit 70. Further, outdoor unit low-pressure gas pipes 34 of the respective outdoor units 2a and 2b are connected to a low-pressure gas pipe 31 via stop valves 45, low-pressure gas diversion pipes 31a and 31b, and a diversion unit 71. Outdoor unit liquid pipes 35 of the respective outdoor units 2a and 2b are connected to a liquid pipe 32 via stop valves 46, liquid diversion pipes 32a and 32b, and a diversion unit 72.

The air conditioning device 20 shown in Fig. 10 includes four outdoor heat exchangers in total because the outdoor units 2a and 2b each include two outdoor heat exchangers. The air conditioning device 20 switches the number of outdoor heat exchangers used between one and four in accordance with an increase or decrease in the capacity requested from the indoor units 8a to 8c or an increase or decrease in air conditioning load due to a change in outside air temperature. At that time, when the number of outdoor heat exchangers used is increased, the rotation speed of the outdoor fan 26 is determined such that the heat exchange amount of the outdoor heat exchanger after the increase in the number of outdoor heat exchangers used is equal to or lower than the heat exchange amount of the outdoor heat exchanger before the increase in the number of outdoor heat exchangers used, and when the number of outdoor heat exchangers used is decreased, the rotation speed of the outdoor fan is determined such that the heat exchange amount of the outdoor heat exchanger after the decrease in the number of outdoor heat exchangers used is equal to or larger than the heat exchange amount of the outdoor heat exchanger before the decrease in the number of outdoor heat exchangers used. This makes it possible to obtain the actions and effects similar to those of the embodiment described above.

Further, although the air conditioning device with a cooling/heating free system capable of performing a cooling and heating mixing operation has been described as an example in the above embodiment, the present invention is not limited thereto and is also applicable to an air conditioning device with an operation system (cooling/heating switching system) that performs one of cooling or heating in all indoor units.

Further, although a four-way valve (the first four-way valve 22 and the second four-way valve 23) has been adopted as a flow path switching valve that is switched when the number of outdoor heat exchangers used is increased or decreased in the above embodiment, a three-way valve may also be adopted as the flow path switching valve.

### Reference Signs List

2a, 2b outdoor unit
8a, 8b, 8c indoor unit
10, 20 air conditioning device
21 compressor
22 first four-way valve
23 second four-way valve
24 first outdoor heat exchanger
25 second outdoor heat exchanger
30 high-pressure gas pipe
31 low-pressure gas pipe
32 liquid pipe
81 indoor heat exchanger
90 control device

## Claims

1. An air conditioning device, comprising:
an outdoor unit that includes
a compressor,
a plurality of outdoor heat exchangers,
a plurality of flow path switching valves that are respectively provided to the plurality of outdoor heat exchangers and switch connection of one refrigerant inlet/outlet of each outdoor heat exchanger to a refrigerant discharge port or a refrigerant suction port of the compressor, and
an outdoor fan that blows air to the plurality of outdoor heat exchangers;
at least one indoor unit that is connected to the outdoor unit via a refrigerant pipe; and
a control device that controls a rotation speed of the outdoor fan, wherein
the control device
determines whether to increase the number of outdoor heat exchangers used in accordance with a requested air conditioning capacity, and determines, when determining that the number of outdoor heat exchangers used is to be increased, the rotation speed of the outdoor fan such that a heat exchange amount of the outdoor heat exchanger after an increase in the number of outdoor heat exchangers used is equal to or lower than the heat exchange amount of the outdoor heat exchanger before the increase in the number of outdoor heat exchangers used, and
determines whether to decrease the number of outdoor heat exchangers used in accordance with a requested air conditioning capacity, and determines, when determining that the number of outdoor heat exchangers used is to be decreased, the rotation speed of the outdoor fan such that a heat exchange amount of the outdoor heat exchanger after a decrease in the number of outdoor heat exchangers used is equal to or larger than the heat exchange amount of the outdoor heat exchanger before the decrease in the number of outdoor heat exchangers used.

2. The air conditioning device according to claim 1, wherein
assuming that a maximum value of the heat exchange amount of the outdoor heat exchanger before the increase in the number of outdoor heat exchangers used is a first heat exchange amount and that a minimum value of the heat exchange amount of the outdoor heat exchanger after the increase in the number of outdoor heat exchangers used is a second heat exchange amount, the control device determines, when determining that the number of outdoor heat exchangers used is to be increased, the rotation speed of the outdoor fan such that the first heat exchange amount is equal to or larger than the second heat exchange amount.

3. The air conditioning device according to claim 1, wherein
assuming that a maximum value of the heat exchange amount of the outdoor heat exchanger after the decrease in the number of outdoor heat exchangers used is a first heat exchange amount and that a minimum value of the heat exchange amount of the outdoor heat exchanger before the decrease in the number of outdoor heat exchangers used is a second heat exchange amount, the control device determines, when determining that the number of outdoor heat exchangers used is to be decreased, the rotation speed of the outdoor fan such that the first heat exchange amount is equal to or larger than the second heat exchange amount.

4. The air conditioning device according to claim 2 or 3, wherein
assuming that a value obtaining by dividing the second heat exchange amount by the first heat exchange amount is a heat exchange amount change ratio, the control device determines the rotation speed of the outdoor fan such that the heat exchange amount change ratio is equal to or lower than a predetermined first threshold.

5. The air conditioning device according to claim 4, wherein
the control device determines the rotation speed of the outdoor fan such that the heat exchange amount change ratio is equal to or larger than a predetermined second threshold that is a value smaller than the first threshold.

6. The air conditioning device according to any one of claims 1 to 3, wherein
the control device uses, as the heat exchange amount, an evaluation index determined on a basis of a volume of each outdoor heat exchanger, a blast volume by the outdoor fan, and a ratio of an air volume flowing into each outdoor heat exchanger to the blast volume.
